# EUROPEAN PATENT SPECIFICATION

(11) **EP 1 954 843 B1**
(45) Date of publication and mention of the grant of the patent: **02.01.2013**
(21) Application number: 06848866.7
(22) Date of filing: 28.11.2006
(51) Int. Cl.: C22B 3/10, C22B 19/20, C22B 23/00

(54) **LEACHING PROCESS IN THE PRESENCE OF HYDROCHLORIC ACID FOR THE RECOVERY OF A VALUE METAL FROM AN ORE**
LAUGUNGSVERFAHREN BEI VORHANDENSEIN VON HYDROCHLORIDSÄURE ZUR WIEDERHERSTELLUNG EINES WERTMETALLS AUS EINEM ERZMINERAL
PROCEDE DE LIXIVIATION EN PRESENCE D'ACIDE CHLORHYDRIQUE PERMETTANT DE RECUPERER UN METAL PRECIEUX DANS UN MINERAI

(30) Priority: 28.11.2005 ZA 200509582
(43) Date of publication of application: 13.08.2008
(73) Proprietor: Anglo Operations Limited, Johannesburg 2001 (ZA)
(72) Inventor: STEYL, Johann Du Toit, 2193 Johannesburg (ZA); SMIT, Jan Tjeerd, 2195 Johannesburg (ZA)
(74) Representative: Setna, Rohan P.
(86) International application number: PCT/IB2006/003380
(87) International publication number: WO 2007/074360

(56) References cited:
- WO-A-93/10038
- WO-A-2004/101833
- WO-A-2005/093107
- WO-A1-2006/043154
- US-B1- 6 395 242

## Description

### BACKGROUND OF THE INVENTION

The invention relates to a leaching process which generates or regenerates hydrochloric acid while leaching a metal from an ore in a chloride solution.

The use of relatively concentrated chloride brines as a medium for the leaching of base metals has been proposed many times in the past, a recent example being the Outokumpu Hydrocopper process, as described and referred to in various patents, such as WO 2003/35916, WO 2003/89675 and others. It is known that high strength chloride brines allow generally faster and more complete leaching than the common, relatively dilute, sulphate media. However, the recovery of dissolved values from such brines is generally cumbersome, not allowing standard electrowinning technology.

The use of a hydrochloric acid (chloride) medium for the leaching of nickel laterites ores has been a research topic at various institutions over the years, with N.M. Rice of Leeds University (see Rice, 1989) particularly pioneering in this field. Favourable leaching kinetics were achieved on both typical silicate (serpentine) and oxide (limonite) ores, thus illustrating that this system can be utilised to leach valuables, like nickel, from a range of materials in a typical laterite horizon. Of particular interest was the fast (1 hr) kinetics of leaching at higher temperatures, typically higher than 80°C, in 4 molar hydrochloric acid solutions. A conceptual flowsheet was subsequently proposed (Rice and Strong, 1974), utilising a hydrochloric acid leach to solubilise the valuable cobalt and nickel, which are then subsequently removed by solvent extraction and hydrolysis as nickel hydroxide (using magnesia as the neutralising agent), respectively. Impurities, such as iron and magnesium, are the major contributors to the consumption of expensive hydrochloric acid. The iron chloride is removed from solution by solvent extraction and treated in a spray roasting step to form stable hematite and to regenerate the hydrochloric acid for circulation back to the leaching step. Similarly, the magnesium chloride is treated in a spray roasting step to form magnesia (sold as a by-product and/or used as neutralising agent) and to regenerate the hydrochloric acid (recycled back to the leaching step).

It is estimated that about 70% of the world land-based Ni resources are contained in laterite ores. Currently, only about 40% of Ni produced is extracted from laterite ores and it is estimated this figure will increase to about 50% by 2012 (figures from Dalvi et al, 2004). There is need for a new processing route to recover Ni and Co from lateritic deposits, at markedly lower operating and especially, capital cost than what existing technologies can offer. Furthermore, looking forward on supply, an estimated Ni demand growth of approximately 4% p.a. will require 40 - 45,000 tonnes p.a. of new Ni production (figures from Dalvi *et al,* 2004). Even when factoring in the addition of new supply from small sulphide deposits, the major greenfield laterite projects (such as the Goro and Ravensthorpe high pressure acid leach projects, new smelters like Koniambo, and new sulphide hydrometallurgical treatment routes such as Voisey's Bay), supply will fall short of consumption.

### Geology and mineralogy

Nickel laterite deposits consist of two main horizons, i.e. limonitic (hydrated iron oxides) material near the surface (0.8-1.5% Ni, low Mg and high Fe) and lower down, saprolitic (hydrous magnesium silicates) material (1.5-3% Ni, high Mg and low Fe). These deposits are formed by a weathering process of the parent rock in the form of Fe-Mg-Si-O-minerals. The laterization processes concentrate Ni and Co by factors of 3 to 30 times, compared to the parent rock. The laterization process is dynamic and the depth profile is essentially a snapshot, with the lowermost part representing the most recently altered rock. Particular varieties of limonitic deposits are formed when abundant free silica (originating from the parent rock) is re-precipitated after it has been leached from the Mg-silicate structure to form siliceous deposits (the Jacaré siliceous deposit is an example of this ore type). In less severe cases of weathering, e.g. drier or cooler climates, or where groundwater movement is restricted (poor draining), leaching rates are lower, which leads to the formation of smectitic clays. The clay horizon (if present) is usually found intermediately between the limonitic and saprolitic zones (Murrin Murrin is an example of a deposit that contains a very definite, intermittent smectic zone within its profile). Close to the laterite-bedrock interface, altered Ni-rich (as high as 20% Ni) hydrous Mg silicate minerals (known as garnierites) form. Garnierites are more prominent in the tectonically active areas such as New Caledonia. Between the bedrock (or garnierite layer, if present) and the limonite (or clay layer, if present), is a transition zone consisting of highly variable magnesium silicate material, called the saprolite zone. The weathering of the parent rock may also here result in free silica, occurring along more permeable geological structures such as shear zones, faults, veins and fractures (see Monhemius, 1987 and Elias, 2002 for a more complete review).

It has to be realised that due to irregularity of the weathering profile (in depth) of the laterite horizon and also due to non-uniform mining, a specific ore sample, e.g. saprolite, may contain variable proportions of other ores, e.g. limonite and/or clay. The laterite ore feed to a process may thus be characterized by highly variable mineralogy and thus, by variable associated processing characteristics and processing costs. The bulk of the known laterite Ni resource is contained in limonitic-type ores and to a lesser degree in saprolite-type ores.

### Current practice

Physical upgrading, when possible, is emphasised as being important, as the economics of any process are more favourable when treating an ore with a higher Ni grade. Unfortunately, both limonite and saprolite ores are difficult to physically upgrade as the Ni is intimately mixed with goethite and magnesium silicate mineralisation, respectively. Distinct possibilities for physically upgrading the ore exist, however, when coarse barren material, such as coarse quartz (in siliceous or saprolite ores) or magnetite (in limonite ores), is present.

### Smelting

The saprolite feed ore typically contains 20-50% free water and this is first removed by drying. The ore is then calcined to drive off structural water and the Fe and Ni is then reduced to the metallic state in a furnace with coke or coal. The Mg, Si, and so forth follow the slag phase and this allows the removal of liquid molten Ni-Fe alloy. Refining is required to remove the remaining S, C and Si. The matte production route requires S to be added to the kiln under reducing conditions to react with metallic Ni to form sulphides. This material is then melted, with the oxides following the slag phase and the sulphides forming the matte phase. Air is blown through converters to oxidise most of the Fe to the slag phase.

Process features:
- It is a process for treating saprolite ores, especially ores with garnierite enrichment;
- The economical cut-off feed grade for low cost power brownfield projects is about 1.7% Ni, and for high cost greenfield projects is approximately 2.1 % Ni (Dalvi *et al,* 2004);
- Ore variability has to be blended out in order to maintain the feed target (Ni grade, slag melting point is sensitive to SiO₂/MgO ratio and FeO, etc.);
- The smelting process route is plagued by high capital and energy costs (and thus is also an environmental issue) and the economics are therefore very sensitive to local power costs;
- Although Ni recovery is good (~90%), no Co by-product credits are possible; firstly because Co levels in saprolite ores are generally low and secondly due to its poor recovery (~50%) (Dalvi *et al*, 2004). In fact, Co in ferro-nickel is undesirable.

### Caron process

The ore is first dried in a rotary kiln and reductively roasted. The Ni and Co are selectively reduced at approximately 700°C to the metallic state (with about 10% partial reduction of Fe). If the silicate content of the feed is increased (by treating more saprolite ore), re-crystallisation of forsterite (amorphous Mg-silicate) occurs, thereby locking up some Ni (not amenable to leaching). Similarly, higher reduction temperature and over-reduction results in an increased tendency to form refractory (to leaching) phases. After cooling, the alloy is atmospherically leached under oxidising conditions (air) in ammonia-ammonium carbonate solution (pH ~ 10). The leached Ni (Co) and Fe form very strong ammine complexes in the solution phase. The ferrous ion is oxidised to the ferric state and hydrolysed as a gelatinous ferric hydroxide (Co tends to co-precipitate with the ferric hydroxide and a significant portion cannot be recovered). After liquid-solid separation, some Ni and all of the Co is precipitated as sulphides, using H₂S gas (Co is less soluble than Ni). The (Co-free) Ni solution is then steam stripped to form basic Ni carbonate (solid phase), and CO₂ and ammonia in the gas phase. The CO₂ and ammonia are recovered for re-use by absorption in water to produce the ammonia-ammonium carbonate solution. The Ni carbonate cake is either sold or treated further by one of a number of "back-end" processes to recover Ni from carbonate salt or solution (see Monhemius, 1987).

Process features:
- It is a process for treating limonite ores, although the process can tolerate some saprolite (increased amounts form the forsterite phase, leading to higher Ni losses);
- Although the major reagents (ammonia and CO₂) are recycled within the process, significant losses do occur (especially due to Mg leaching); make-up reagents are also required in order to produce a relatively pure product;
- More than 60% of total energy input is consumed by up-front processes (drying of wet ore and reductive roasting), while the back-end reverts back to hydrometallurgical processing, i.e. a highly energy inefficient process;
- Filtration is poor due to the gelatinous nature of the ferric hydroxide precipitate;
- Low value recovery for both the pyrometallurgical (forsterite formation) and hydrometallurgical (co-precipitation of Co and blocking of leach particles due to precipitation of Fe) processes; overall, approximately 75% Ni and 50% Co is recovered.

No greenfield projects are expected to make use of this technology due to its low valuable metal recoveries and because it targets an ore type with a relatively low Ni grade (predominantly limonitic ores), while accompanied by high energy and reagent costs (see Dalvi *et al,* 2004).

### High pressure acid leach (HPAL) process

From a metallurgical point of view, the HPAL process is relatively simple, evolving around the high temperature acid decomposition step at temperatures over 245°C. The discharge slurry is neutralised with lime and decanted counter-currently, followed by impurity removal and Ni and Co precipitation, as sulphides (H₂S) or hydroxides (lime), or direct Ni and Co removal by solvent extraction (Goro flowsheet). Optional further purification and separation involves re-dissolution (if precipitated solids were produced) and purification by solvent extraction or selective precipitation. Finally, metal is recovered via electrowinning or hydrogen reduction, or Ni oxide is produced via pyrohydrolysis (the chloride chemistry being associated with SX or IX, and not with the leach).

Process features:
- It is a process for treating limonite ores, thus making the resource target larger than for smelting (limonite ore is significantly more abundant than high grade saprolite ore). However, the operating cost is very sensitive to the major acid consumers, i.e. Al (clay materials) and especially, Mg (<4% is a commonly accepted limit for being economically treatable);
- Corrosion is high at high temperatures, especially when chlorides are present (saline water). Corrosion resistance is improved when using high grade Ti alloys, but these are expensive;
- Capital costs are very high due to the use of pressure equipment and materials of construction;
- Reagent costs are very high due to the acid consumers (Mg, Al) and the need to maintain a high acidic background (to overcome the negative effect of bisulphate formation, "at temperature"), as well as the requirement to neutralise after the leach (lime costs);
- Scale formation is a problem in autoclaves and results in down-time, especially for the higher Mg and Al feeds;
- Depending on the location, disposal of sulphate containing effluent is an increasingly important issue.

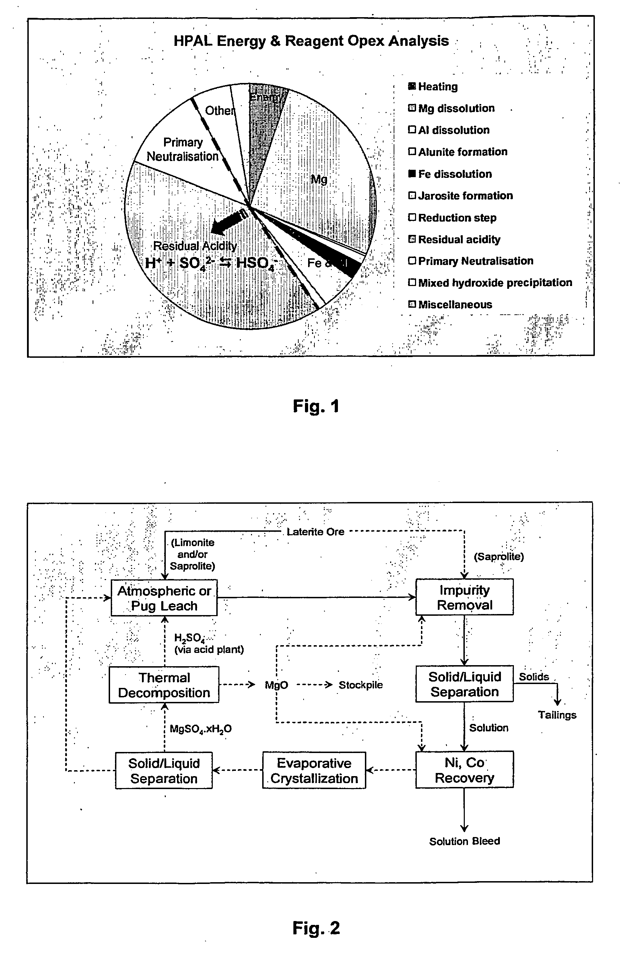

The study of Dalvi *et al,* 2004 suggests that the economics of the HPAL route are very sensitive to the feed grade, i.e. an estimated lower feed grade limit of 1.3% Ni can be applied for greenfield projects, unless offset by lower than average acid consumption (ref. to the Ambatovy Project in Madagascar) or when situated close to a cheap source of acid (for example, a sulphide smelter operation). Figure 1 illustrates the inefficiency of the HPAL process in terms of reagent usage. It can be seen that the major culprit in terms of acid consumption is Mg, with the realisation that very little can done about it, except by treating low Mg (limonitic-type) feed ores. In addition, approximately half of the cost is dedicated to maintain the chemical background (to compensate for bisulphate formation, "at temperature"), while not actually participating in the leaching reactions. The "extra" acid then also needs to be neutralised after pressure leaching. The higher the pulp density, the less the chemical background effect on the cost in absolute terms (cost/lb Ni produced). However, the maximum pulp density is limited due to viscosity issues.

### New developments

There is a definite tendency in the industry to develop viable atmospheric leaching (AL) processes, especially because of lower capital requirements, but also with the goal of being able to treat both limonite and saprolite ores.

### Open circuit, sulphate-based processes

A limonitic ore typically would be leached at high residual acid concentrations, while a saprolite ore (with a higher neutralisation capability) is then used to neutralise the residual acid and the acid released during Fe hydrolysis. This approach not only saves on neutralisation costs, but also harvests additional Ni contained in the saprolite ore. A combination of HPAL and atmospheric (post-leach) neutralisation with saprolite ore, the so-called Enhanced Pressure Acid Leach (EPAL) process has also been developed and is currently applied to the Ravensthorpe Project in Western Australia. This concept was originally patented by AMAX in the 1970s. The AMAX Process also makes provision for a roaster to partially reduce the saprolite ore, i.e. to increase its reactivity for neutralisation. The option may also be exercised to recycle any un-leached Ni in the final residue (with the bulk of the Mg removed) back to the HPAL leach (see Monhemius, 1987).

EPAL process features:
- The atmospheric leach would be characterised by slow kinetics, although it would be largely compensated for by low capital expenditure, i.e. residence time is relatively cheap (as compared to HPAL) ;
- The hydrolysis of Fe under atmospheric conditions in a dilute sulphate system may lead to environmentally unacceptable products;
- Even if the atmospheric leaching system may be effective in dealing with the removal of Fe (neutralisation/hydrolysis with saprolite ore), significant losses of acid will still occur due to excessive Mg leaching (this cost can however be partially compensated for by extra energy generated from additional sulphur burning, and also by harvesting additional Ni revenue);
- The EPAL approach may introduce even higher capital costs as compared to HPAL;
- Effluent disposal may be an issue, especially with ever-tightening environmental laws.

A complete AL process in sulphate medium would require very aggressive (high acid) leaching conditions to ensure high Ni and Co extraction. This would, in turn, require high neutralisation requirements by saprolite material which, in turn, would result in high sulphate losses via Mg in solution and probably as jarosite in the residue (even when using seawater as process water). High reagent consumption (sensitivity towards the sulphur price) and environmental requirements may make this route risky and economically unviable. For this reason, alternative processes have been proposed to try and engineer around the Mg issue. One such process, proposed by American Climax Inc. (a predecessor of the AMAX company), used crystallisation in an autoclave at 190-250°C to precipitate the sulphate as the monohydrate. Since this process would require an additional and expensive autoclave, Sulzer in Switzerland came up with the SURAL process (Sulzer Regenerative Acid Leach Process), proposing evaporative crystallisation to produce epsomite (MgSO₄.7H₂O). This sulphate salt is then thermally decomposed to generate SO₂ (converted to sulphuric acid in an acid plant and recycled back to a HPAL) and the neutralising agent, magnesia (MgO), which is recycled within the process (see Monhemius, 1987). The recently-proposed Skye Resources proprietary atmospheric leach process is almost identical to the SURAL process, except that the primary leaching step is also atmospheric. The Skye process flowsheet is illustrated in Figure 2.

Skye process features (not commercialised):
- It is unlikely, even under very aggressive atmospheric leaching conditions (using pug leaching, for example), that Ni extractions in the sulphate system can compare with HPAL;
- Replacement of reagent make-up costs by energy/fuel costs, which may be good or bad, depending on the location;
- Difficulties in producing environmentally stable Fe hydrolysis products;
- The crystallisation of Mg sulphate salt from dilute sulphate solution by evaporation requires a significant amount of energy (high evaporation requirement), probably beyond the amount that an otherwise normal water balance would have required (this becomes increasingly important as the Mg grade of the primary feed ore increases).

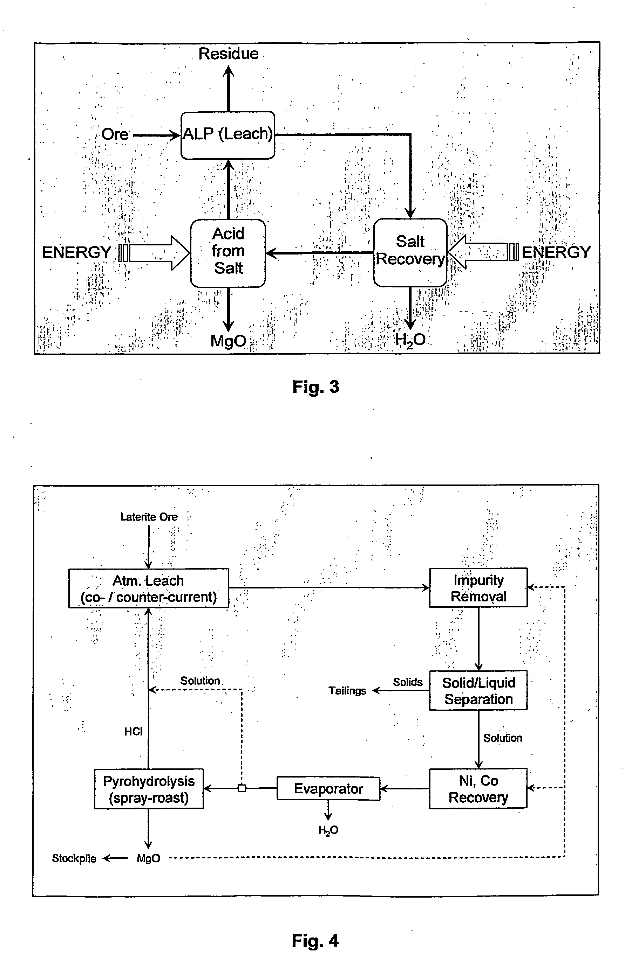

The closed-circuit Skye process belongs to a new group of processes, here termed the Regenerative Atmospheric Leach (RAL) processes. The broad concept is illustrated in Figure 3.

This approach may now be put into perspective with the open-circuit processes: at the top end, in terms of energy requirement, lies the Smelting process. At the bottom end, lies the AL process. However, in order to obtain acceptable Ni extraction, high residual acid would be required for this approach, especially for limonite ores, which in turn would translate into high neutralisation costs (the low Ni grade of limonite ores and its low reactivity in sulphate medium would probably eliminate this as an economically viable route). If a high grade saprolite ore is available as neutralising agent, this route may be viable. However, the economics are going to be extremely sensitive to the Ni grade, and the Ni and the sulphur (S) price. If any of these swings negatively, this route may become uneconomical, and this route thus has a high economic risk attached to it. Finally, environmental factors are seriously poised against an open circuit route. If seawater is used, there may be slight improvements in US separation compared to pure water. However, using sulphuric acid to leach, at chloride levels of about 20 g/I (which is typical for seawater), hematite is unlikely to form during neutralisation. The residue and the very high levels of Mg sulphate would need to be disposed of, which may not be that straight forward, especially in a wet-type climate.

The energy costs for the HPAL process are surprisingly low due to the flash-and-splash pre-heating development. Due to its selectivity over Fe at high temperature (thermally driven precipitation), the reagent consumption is relatively low. However, due to the high capital investment, the economics are always going to be very sensitive to the acid consumption and thus the Mg content of the ore, so-much-so, that generally not more than about 4% Mg can be dealt with, which makes this a pure limonite process. It is only high grade or upgradeable limonite ores, with low acid consumption that will qualify for this process route.

The EPAL approach tries to utilise the residual acid in the HPAL discharge, to harvest more Ni from a saprolite ore and to reduce neutralisation costs. However, it would become an economical question whether extra revenue from treating saprolite ore is worth adding extra acid. If the S price is good, extra acid may be manufactured to leach more saprolite. During times of high S price, the flowsheet can revert back to only neutralising with saprolite, thus accepting the lower Ni recovery. This process therefore holds lower risk compared to the open-circuit, AL process. The capital expense is, however, of concern, as is the environmental impact.

### Closed circuit, chloride-based processes (not commercialised)

### Jaguar process:

The Atmospheric Chloride Acid Leach process flowsheet is illustrated in Figure 4 (hereafter called the Jaguar process, referring to the Canadian nickel exploration and mine development company Jaguar Nickel Inc., which developed this proprietary process). It consists of an atmospheric leach process in hydrochloric acid solution, containing a high background of Mg chloride. It is claimed (Harris *et al,* 2004) that the activity of the proton is dramatically increased with an increasing concentration of Mg chloride in the background solution. The leach may be 2-stage, where the ore is first leached to bring Ni and Co into solution, and then controlled to reject Fe in the second stage. An added advantage of hydrolysing the Fe from brines, so it is claimed, is that a low water activity in brine solutions tends to enhance dehydration reactions. In principle, hematite can be formed at atmospheric temperatures, where otherwise (in a pure sulphate system) an autoclave, operating at significantly higher temperature, would be required. After recovery of the valuable metals, the solution is evaporated to maintain the water balance and the resulting Mg chloride brine is recycled back to the leach. A bleed stream is pyrohydrolysed to produce magnesia (partially recycled as an internal neutralisation agent) and hydrochloric acid in the gas phase. The hydrochloric acid is then condensed and recycled to the atmospheric leach vessel.

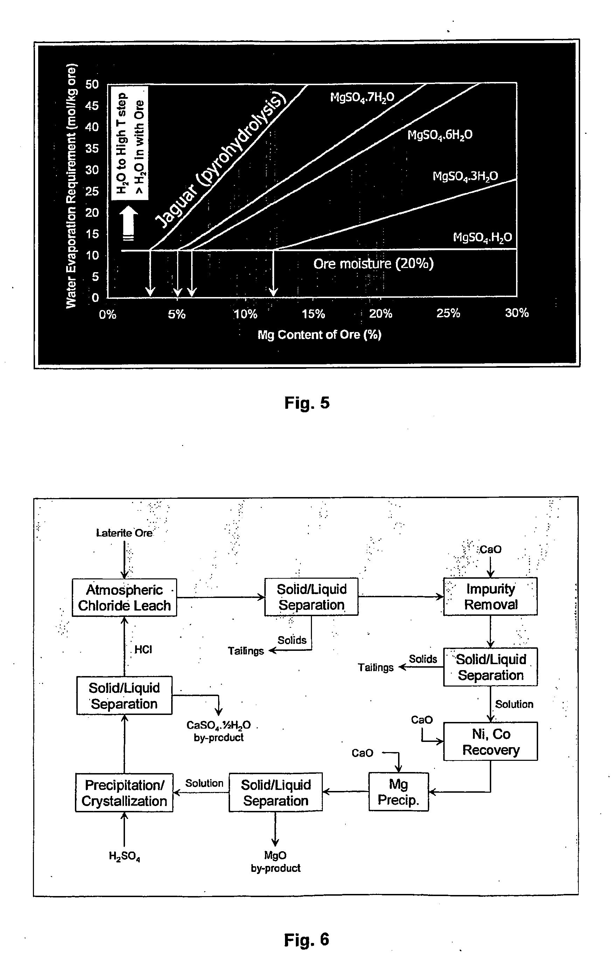

The economic difficulties with the Jaguar process become apparent when realising that a significant amount of energy is wasted in the evaporation of excess water from the concentrated magnesium chloride solution before and during pyrohydrolysis, rather than regenerating the reagents. The higher the Mg grade of the material leached, the more water will be carried over to the pyrohydrolysis step in absolute terms, i.e. per kilogram ore treated. The end result is that with an increasing Mg feed grade, the Jaguar process quickly becomes very inefficient with regards to its water balance; so-much-so, that a point is reached where extra water will have to be added to the circuit to absorb the higher Mg into solution, just to be evaporated again during pyrohydrolysis. Similarly to the Jaguar process, a "drawn-in" effect in the water balance, caused by the Mg head grade, although to a lesser degree, is likely also present in the Skye process (in this case, to prevent pre-mature sulphate salt crystallisation in other parts of the circuit), except that the "extra" added water can be relatively efficiently dealt with in a multiple-effect evaporator and only the water of hydration of the Mg sulphate salt would impact on the (expensive) high-temperature thermal decomposition step. The lower the hydration state of the Mg sulphate salt produced, the less the impact of the Mg feed grade on the water evaporation load in the high-temperature reagent regeneration step (Figure 5). The steeper the lines in Figure 5, the less the ability of the extra Ni recovered (from treating higher grade saprolitic ores) to absorb the cost of water evaporation during high-temperature reagent regeneration.

The heat recovery for pyrohydrolysis reactors is poor and complicated (Steinbach & Baerhold, 2002 and Adham & Lee, 2002). Exotic materials are required, since hydrochloric acid tends to condense in the waste heat boiler during energy exchange. Alternatively, if hydrochloric acid removal is conducted first, the heat value for recovery is lost. Another important factor is that impurities such as Ca and Na chlorides will not pyrohydrolyse and the corresponding equivalent chloride values would have to be replaced with expensive make-up hydrochloric acid or Mg chloride. It is also anticipated that the overall efficiency of the pyrohydrolysis reaction would be significantly less than 100%.

Jaguar process features:
- Pyrohydrolysis is viable at relatively low temperature (~ 500°C) but heat recovery is complicated (high capital expenditure) and relatively poor;
- The Jaguar process would become uneconomical when treating laterite ores with high Mg content, i.e. it is essentially a process for treating limonitic ores;
- Impurities such as Ca and Na do not pyrohydrolyse and the equivalent chloride values have to be replaced by expensive make-up hydrochloric acid or Mg chloride salt (not to mention compensating for the inefficiency in the MgCl₂ pyrohydrolysis step).

The fact that the Jaguar process cannot absorb significant amounts of Mg makes it uncompetitive compared to more omnivorous sulphate-based atmospheric processes like the Skye process.

### Intec process

A chloride-based process was proposed recently (Moyes *et* al, 2005), attempting to eliminate pyrohydrolysis, i.e. to regenerate hydrochloric acid via precipitation of a sulphate salt with sulphuric acid. The concept behind this revolves around using chemically driven crystallisation with cheap sulphuric acid to regenerate expensive hydrochloric acid, rather than pyrohydrolysis. This Intec process operates via the CaCl₂/SO₄ cycle (Figure 6).

The process follows similar logic to the Jaguar process, except that only a bleed stream is subjected to Fe removal and Ni/Co recovery, using added lime. The resulting solution is then subjected to Mg precipitation with lime to form magnesia (MgO). All three of these unit operations essentially result in the replacement of the cation chloride, with the equivalent amount of Ca chloride. The total amount of hydrochloric acid consumed in the circuit is then regenerated by adding sulphuric acid, causing the precipitation of a Ca sulphate salt (low solubility). The regenerated hydrochloric acid is then recycled back to the atmospheric leach. The sulphuric acid and lime, in turn, may then be regenerated by thermal decomposition of the Ca sulphate salt.

Intec process features:
- Saleable bassanite (CaSO₄.½H₂O) and magnesia (MgO) by-products are claimed to be formed in the process. However, there are always going to be issues around product purity with by-products like these;
- It is unlikely that sulphuric acid and lime can be regenerated economically via thermal decomposition of the Ca sulphate salt. The thermal decomposition reactions proceed through complicated intermediates, the lime product may be refractory and the process would require a very high energy input;
- The higher the Mg content of the feed ore, the more sulphuric acid and lime make-up would be required, thus making the process uneconomical for treating saprolite ores.

### SUMMARY OF THE INVENTION

According to the invention, there is provided a process for leaching a metal from an ore containing said metal, the process including the steps of:
(a) leaching the ore in the presence of hydrochloric acid so as to form a soluble metal-chloride salt in a leach solution;
(b) adding sulphuric acid and/or sulphur dioxide to the leach solution;
(c) recovering a solid metal-sulphate or metal-sulphite from the leach solution;
(d) regenerating hydrochloric acid; and
continuously transferring at least a portion of the hydrochloric acid in solution to the vapour phase.

The hydrochloric acid in the vapour phase may be captured and recycled in the leaching process by being returned to step (a).

The hydrochloric acid may be transferred to the vapour phase by heating the solution to its boiling point, and by the use of a carrier gas, such as air.

Prior to being returned to step (a) of the leaching process, the hydrochloric acid in the vapour phase may be subjected to a distillation process so as to remove water and concentrate the hydrochloric acid.

The sulphuric acid and/or sulphur dioxide may be added to the leach solution after the leaching step and the hydrochloric acid may be simultaneously regenerated.

Alternatively, the sulphuric acid and/or sulphur dioxide may be added to the leach solution during the leaching step so as to form the soluble metal-chloride salt and a solid metal-sulphate or metal-sulphite salt in a leach solution; and the metal-sulphate or metal-sulphite salt may be subsequently recovered and a hydrochloric acid solution that is high in chloride ions and low in sulphate or sulphite ions may be simultaneously generated.

The metal-sulphate or metal sulphite may have the formula MeSOₓ.yH₂O, where: Me is a metal; x is 3 or 4; and y is 0 or greater.

The source of the metal in the metal-sulphate or metal-sulphite may be predominantly from the ore.

The ore may be an essentially oxidic or silicaceous base metal ore, such as a zinc oxide ore; a lateritic nickel ore, such as a saprolitic or limonitic ore, or a sulphide, titanium or aluminium ore.

The metal that is leached from the ore may be selected from the group consisting of Zn, Cu, Ti, Al, Cr, Ni, Co, Mn, Fe, Pb, Na, K, Ca, platinum group metals and gold.

A process according to any one of the preceding claims, wherein the metal in the metal-sulphate or metal-sulphite may be the metal that is leached, and the process may additionally include a step of decomposing the metal-sulphate or metal-sulphite to recover the metal. Alternatively, the metal in the metal-sulphate or metal-sulphite may be a metal of less value than the metal that is leached.

### BRIEF DESCRIPTION OF THE DRAWINGS

- Figure 1:: A breakdown of the energy and reagent costs for the HPAL process;
- Figure 2:: The Skye process flowsheet;
- Figure 3:: The broad Regenerative ALP concept;
- Figure 4:: The Jaguar process flowsheet;
- Figure 5:: High-temperature water evaporation requirement for different intermediate process products;
- Figure 6:: The Intec process flowsheet;
- Figure 7:: The ARNi process concept;
- Figure 8:: The ARNi process flowsheet (base-case);
- Figure 9:: Ni extraction curves after diagnostic leaching of a limonite ore in different chemical systems;
- Figure 10:: Co extraction curves after diagnostic leaching of a limonite ore in different chemical systems;
- Figure 11:: Hydrogen ion activity in 0.5 mol/kg HCl with varying Mg chloride background and temperature;
- Figure 12:: Free (un-associated) hydrogen ion molality as a function of the formal acid molality (1 mol/kg acid as HCl is equivalent to 0.5 mol/kg acid as H₂SO₄) and temperature in 2.5 mol/kg Mg);
- Figure 13:: Magnesium sulphate solubility as a function of temperature and acid concentration (Aspen Plus^{®} simulation, 2005);
- Figure 14:: Magnesium sulphate solubility as a function of temperature and chloride background concentration (Aspen Plus^{®} simulation, 2005);
- Figure 15:: The extended ARNi Process concept;
- Figure 16:: The ARNi Process flowsheet (extended version including hydrochloric acid volatilisation);
- Figure 17:: An illustration of how the hydrochloric acid volatilisation technique would be integrated into the main ARNi concept;
- Figure 18:: The experimental setup used for measuring the vapour composition in equilibrium with the brine solution;
- Figure 19:: Measured data (points) and model prediction (surface plot) of the mass fraction hydrochloric acid in the vapour phase (with the balance consisting of water vapour) for the HCl-MgCl₂-H₂O system;
- Figure 20:: Result of sulphur dioxide absorption tests in 2 mol/kg FeCl₃ and 0.5 mol/kg HCl solution at 105°C;
- Figure 21:: A conceptual illustration of the hydrochloric acid volatilisation scheme
- Figure 22:: The Ni extraction from Jacare Ferrugenous ore at low pulp densities (5% low solids content) after 120 min leach time in 1 mol/kg HCl, but varying temperature and Mg chloride concentration;
- Figure 23:: The Anglo Research Zn (ARZn 0) base-case concept;
- Figure 24:: The Anglo Research Zn (ARZn 1) variation 1 concept;
- Figure 25:: Leaching kinetics under non-oxidative leaching conditions in HCl at 90°C (+38-75µm);
- Figure 26:: Bench-scale non-oxidative atmospheric leach setup;
- Figure 27:: Leaching results under non-oxidative conditions at low pulp density (2% solids) and 115°C after 120 min leach time;

### DETAILED DESCRIPTION OF THE INVENTION

Co-pending International PCT Applications PCT/IB2005/003128 and PCT/IB2005/003136, which are incorporated herein in their entirety, disclose processes for the leaching of one or more metal values in a solution containing hydrochloric acid, from which the metal value is recovered as a solid sulphate or sulphite salt and the hydrochloric acid in the solution is simultaneously restored. These related processes have been named the Anglo Research Nickel (ARNi) process.

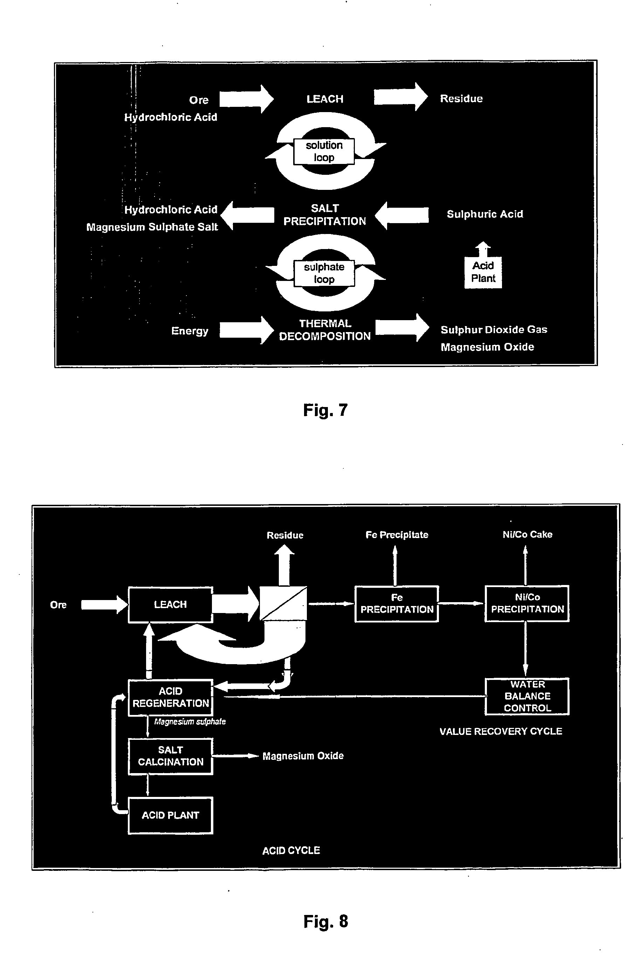

The ARNi process and the base-case flowsheet are represented in Figures 7 and 8, respectively. It is a closed circuit brine leach process, operating under atmospheric conditions. The reagents required, for the leaching and neutralization steps are regenerated within the process. The key to the process economics lies in the recovery of a magnesium salt from spent leach liquor with a minimum requirement for water carry over, by utilising the lowered solubility of magnesium salts in strong magnesium chloride backgrounds. This allows the generation of hydrochloric acid using sulphuric acid directly while simultaneously rejecting the sulphate entering the circuit as magnesium sulphate crystals:

H₂SO_{4 (aq)} + MgCl₂ (aq) + H₂O → MgSO₄.H₂O ₍ₛ₎ + 2HCl _{(aq)} [1]

The reagent loop is closed by the thermal decomposition of these magnesium sulphate crystals into sulphur dioxide and magnesium oxide.

MgSO₄. H₂O ₍ₛ₎ → MgO ₍ₛ₎ + SO_{2 (g)} + H₂O _{(g)} [2]

The magnesium oxide is partly used as the neutralising agent in the process while sulphur dioxide is used to produce sulphuric acid.

The ARNi process allows for the restoration of the hydrochloric acid strength in a chloride brine leach solution, without the need of evaporating large quantities of water, as is required, for example, when pyrohydrolysis is used. All make-up reagents are relatively cheap, with the option of regenerating the bulk of the make-up requirement within the process.

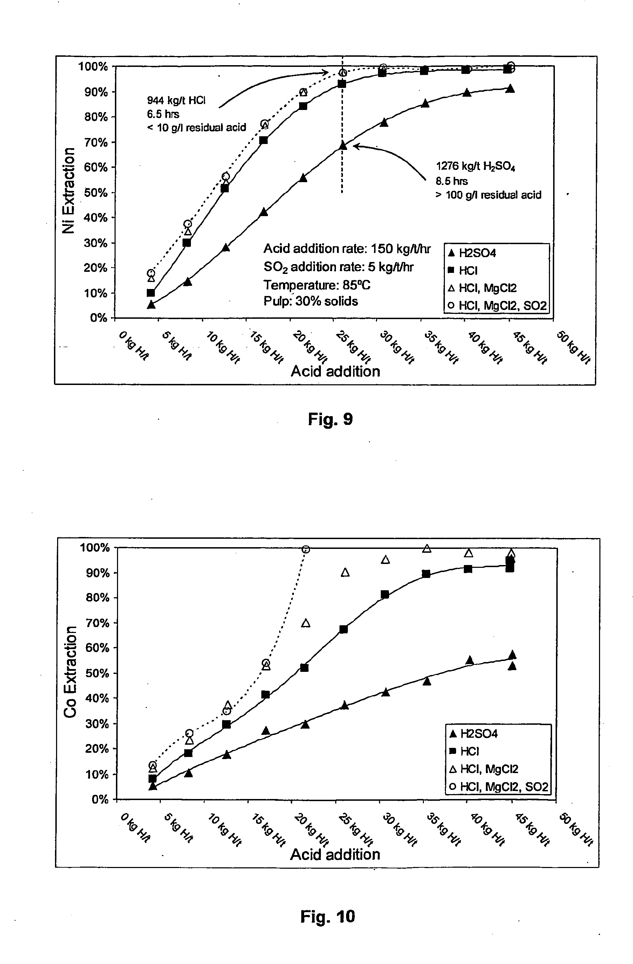

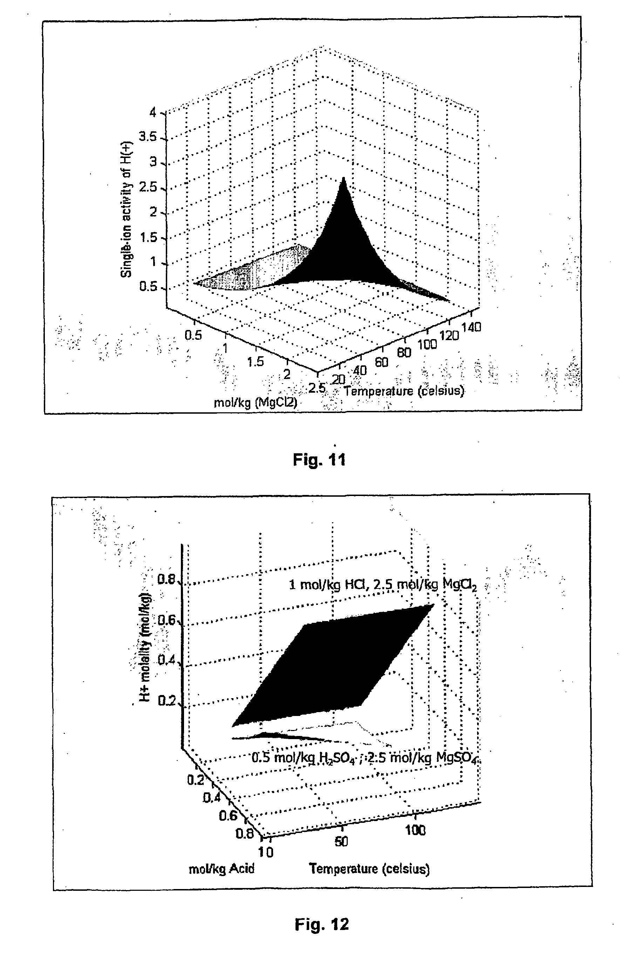

The high chloride levels in the ARNi process solution result in higher proton reactivity than in the other RAL processes, which is especially important when leaching limonite ores (most resistant to chemical attack). This is illustrated in Figures 9 and 10, representing the Ni and Co extraction curves, respectively, following diagnostic leaching of a limonite ore in different chemical media. The chloride system represents a more aggressive leaching system, especially if the chloride background concentration is increased (∼2 mol Mg chloride per kg water, in this case). This, in turn, results in a lower residual acid concentration and thus into a lower neutralisation requirement. Clearly, the only way of compensating for the sluggish leaching response in sulphate system is by adding excess acid. The beneficial effect of adding sulphur dioxide gas is due to its reductive power in breaking down oxidised minerals, especially those containing a major portion of the Co. The reason for the more aggressive leaching conditions in a chloride environment is thought to be two-fold:
- The hydrogen ion activity is increased by increasing the chloride ion background (Figure 11);
- The hydrogen ion molality is decreased in the presence of sulphate due to the formation of the bisulphate ion (H-chloride bond is weaker than the H-sulphate bond - Figure 12).

With regards to the water balance, all three RAL (closed circuit) processes would show very similar energy requirements for a limonite feed ore, which could be effectively dealt with by a multiple-effect evaporator. However, the evaporation load when the Mg feed content increases would be high for the pure sulphate (extra water added to prevent unwanted sulphate crystallisation) and chloride (extra water to keep Mg chloride in solution prior to pyrohydrolysis) systems. In addition, the Jaguar process would result in an increased amount of water flow (in absolute terms, i.e. per kilogram Ni recovered) to the expensive high temperature step (pyrohydrolysis), whereas for the ARNi process, the low waters of hydration of the salt effectively decouples the high-temperature evaporation requirement from the Mg content of the feed ore.

From an environmental point of view, the pure sulphate system would likely result in Fe sulphate hydroxide and Fe hydroxide formation, which may not be environmentally acceptable, especially in high rainfall areas. It would also result in high sulphate losses from the circuit, not to mention settling problems. If goethite precipitation is attempted, which would require very special operating conditions, high losses of Ni and Co can be expected (goethite is the vehicle that upgrades Ni and Co in nature in the first place, i.e. during the lateralisation process). Hematite, in turn, is more easily formed in the high chloride systems, is environmentally stable and cannot re-absorb Ni and Co in its crystal structure. Hematite is also known to show improved settling and filtration characteristics with relatively low moisture content. It may also be used as industrial pigment, for example, in brick-making.

Alkali-metal impurities, such as Na and Ca, would build-up in the pure chloride system until precipitation occurs, resulting in some chloride losses. This is because these metals do not pyrohydrolyse. These impurities can be dealt with in the ARNi process by removing Na as jarosite and Ca as gypsum. In fact, it is hoped to exploit the sodium jarosite formation reaction to replace chloride losses from the circuit, using the relatively cheap reagents, sulphur and Na chloride.

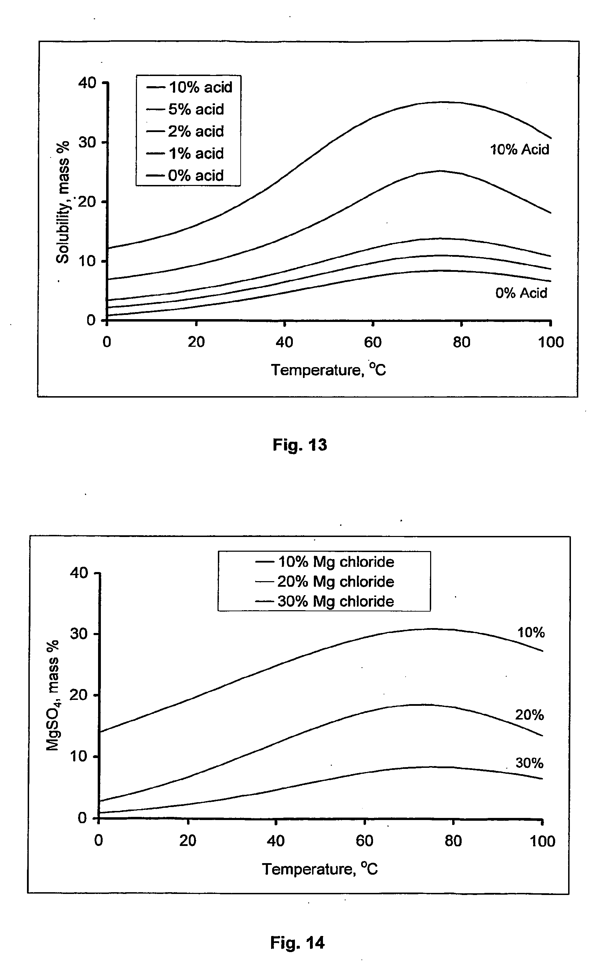

The pure sulphate, closed circuit (Skye) approach would, as mentioned above, require a manipulation of the solubility levels between the different unit operations, primarily by adding and removing water (expensive). Temperature can also be used, but is expected to be significantly less effective within the constraints of staying at atmospheric pressure and minimising heating/cooling duties. The mixed brine system selected for the ARNi Process opens up cheaper, alternative options. The primary source of sulphate (sulphuric acid) is added at the crystallisation step, thus creating a common-ion effect and ensuring the precipitation of Mg sulphate salt. Naturally, this is also the point where the hydronium ion would be at its highest, which creates an unwanted solubility effect, i.e. an increase in solubility, probably due to the formation of the bisulphate (HSO₄⁻) ion (Figure 13). A high degree of flexibility is provided (refraining from using water for this purpose) by integrating the circuit correctly and hence manipulating the chloride and sulphate levels in the crystalliser. The Mg chloride background provides greater flexibility than what pure sulphate systems can provide (Figure 14). Directing the most concentrated chloride and sulphate process streams, i.e. the pregnant leach solution (PLS) and the post-evaporation stream to the crystalliser, makes the most sense. In addition, super-saturation of Mg sulphate would be most prevalent in the evaporation step, thus compensating even more for the above mentioned inefficiency.

In terms of the process economics and circuit control, manipulation of the sulphate solubility level in the crystalliser is very important. The primary reason for this is the need to move away from a knife-edge situation between the solubility levels in the Crystalliser, where sulphate removal is mandatory, and the Neutralisation circuit (where the final residue is generated), where sulphate removal is to be prevented.

The applicants have now developed a process to control the circuit via the volatilisation of at least a portion of the formed hydrochloric acid. In particular, some hydrochloric acid is volatilised to eliminate the addition of water for the manipulation of the relative solubility levels in the circuit, and also to ensure enough hydrochloric acid is always recycled to the leaching step, i.e. to compensate for feed ore variability.

The present invention therefore describes a process for leaching a value metal from an ore which optimises reagent and energy usage. The primary reagent, i.e. HCl, is regenerated without the need to neutralise post-leach liquors prior to crystallisation or the need to make-up of fresh reagents. This approach becomes more effective in high brine solutions, which add additional benefits of: 1) dehydrated crystallisation product, i.e. lower energy of thermal composition required (regeneration of reagents); 2) dehydrated stable Fe hydrolysis products (such as hematite) at atmospheric temperatures; 3) fast leaching kinetics due to the high proton activity; and 4) leaching and recovery of important by-products (for example Pb, Ag).

The value metal is leached from a metal-bearing material, which may be either a sulphide or non-sulphide material. For example, the material may be an oxidic base metal ore, such as a zinc oxide ore; a lateritic nickel ore, such as a saprolitic or limonitic ore; a sulphide ore, an aluminium ore or a titanium ore. The metal values first form a soluble metal-chloride, prior to formation of the solid sulphate or sulphite salt.

The value metal is typically selected from the group consisting of Zn, Cu, Ti, Al, Cr, Ni, Co, Mn, Fe, Pb, Na, K, Ca, platinum group metals and gold.

The metal-chloride salt solution can be an alkali solution, and/or similarly the metal-sulphate can be an alkali metal-sulphate salt.

Sulphuric acid, typically at a concentration of at least 30% (e.g. about 98%), and/or sulphur dioxide is added to the solution containing the leached value metal so as to form the solid metal sulphate salt or metal sulphite salt which is subsequently recovered. In this way, a relatively inexpensive reagent (sulphuric acid or sulphur dioxide) is used to regenerate a more expensive reagent (hydrochloric acid), resulting in a considerable saving.

However, the thermodynamics and kinetics of these chemical reactions may become unfavourable as an appreciable amount of the hydrochloric acid is regenerated. The present invention specifically addresses this issue and proposes the controlled removal of hydrochloric acid from solution in the reactor via stripping (evaporating) and trapping, stripping and condensing and/or by distilling at least a portion of the hydrochloric acid and subsequently recycling this removed hydrochloric acid portion to the circuit.

The solid metal sulphate salt or metal sulphite salt typically has the formula:

MeSOₓ.yH2O

where Me is a metal,
x is 3 or 4, and
y is 0 or greater, such as from 0 to 3, and more particularly, 0 or 1.

Metal chloride concentrations are typically selected to:
positively affect the leach process, as described in, for example, the Jaguar process;
allow metal leaching from the ore, without exceeding the solubility of the metal chloride under leach conditions (alternatively, water may be added to prevent chloride losses to the solid phase);
allow easy precipitation of the corresponding sulphate or sulphite - i.e. the metal concentration must be in excess of the sulphate or sulphite solubility;
affect the hydration state of the sulphate or sulphite salt precipitated, such that a lower hydration state is produced than would be possible from a dilute sulphate or sulphite solution;
not exceed solubility limits in the other unit processes (this may require different operating temperatures for the various unit processes. Alternatively, water may be added to specific unit operations in order not to exceed solubility limits); and
allow easy volatilisation of at least a portion of the formed hydrochloric acid. This would encourage the suppression of the sulphate solubility, thus maintaining the hydrochloric acid balance around the circuit.

The initial concentration of the hydrochloric acid is selected so as to leach a high proportion of the value metal while also fulfilling acid consumption demands from the ore.

The sulphuric acid and/or sulphur dioxide is generally added to the solution in a sufficient quantity so as to result in the strength of the regenerated hydrochloric acid exceeding the azeotrope, as determined by the metal or alkali metal chloride solubility, as compared to the hydrochloric acid strength resulting from its precipitation as a sulphate or sulphite. The brine solution has a background concentration of the metal chloride, to which is added additional strength during leaching. Preferably, the addition of sulphuric acid or sulphur dioxide to this solution does not significantly exceed that amount required for restoring the brine acid strength to its original value. In other words, the background metal chloride concentration should not be removed by the crystallisation of the corresponding sulphate or sulphite salt. Alternatively, the leach liquor may be split into fractions, only one of which is subjected to sulphate or sulphite precipitation, in which case the precipitation may be driven as far as solubilities allow, as the background chloride levels are maintained in the non-treated fractions.

The process also includes a crystallisation step to produce metal-sulphate or metal-sulphite crystals having low waters of hydration. As an alternative, evaporative crystallisation (within, or even slightly exceeding normal water balance requirements) may be utilised to alleviate the load of the above-mentioned chemical crystallisation reaction. This alternative is made possible due to the superimposed effect of the background brine on the degree of salt precipitation upon water evaporation. Furthermore, co-precipitation of Ni within the crystal structure of the magnesium salt is typically most prevalent when performing crystallisation at lower temperatures. This tendency for Ni to co-crystallise essentially diminishes when conducting chemical crystallisation close to the atmospheric boiling point of the solution. If this loss of valuable nickel from the circuit is found to be unacceptable, the current invention proposes that the chemical crystallisation step be conducted in a series of sequential stages. This would allow the manipulation of processing conditions to, for example, favour contaminated (Ni) salt crystallisation in the initial stages of the crystalliser, but relatively pure salt formation in the latter stages of the crystalliser. The impure salt product may be recycled within the process. The pure salts can be sold directly, can be subjected to thermal decomposition to produce a metal oxide, which can be sold, and sulphur dioxide, trioxide or a mixture thereof, and/or can be re-dissolved in a sulphate medium and thereafter subjected to an electrowinning step.

One or more value metals, such as cobalt, nickel, platinum group metals, gold, silver and/or copper, can be selectively separated from the solution prior to the formation of the metal-sulphate or sulphite salt.

Iron and/or other residual impurities resulting from the solubilisation of the ore can be partially or completely removed from the leach solution by, for example, solvent extraction followed by pyrohydrolysis, or hydrolysis.

The metal in the metal-sulphate or sulphite salt may be the value metal, in which case the process typically includes a step of decomposing the metal-sulphate or metal-sulphite salt to recover the value metal.

Alternatively, the metal in the metal-sulphate or sulphite salt may be a metal of less value than the value metal, such as magnesium, and the value metal may be recovered independently of the metal salt formed by the addition of sulphuric acid or sulphur dioxide.

The metal-sulphate or sulphite salt can be treated so as to release sulphur dioxide.

The process is not necessarily limited by temperature ranges, provided that the solubility of the metal sulphate or sulphite is significantly less than the corresponding chloride. Nevertheless, leaching is generally performed at a temperature between room temperature and the boiling point of the solution, and the sulphate or sulphite crystallisation step is generally carried out at a temperature where the referred to solubility differences are maximum.

Magnesium can optionally be removed from the leach solution and replaced with a different metal cation, such as calcium, lead or barium, prior to the addition of sulphur dioxide. After removal of the magnesium, the metal salt that is formed by addition of the sulphur dioxide is an intermediate-sulphite or sulphate, such as calcium sulphate, calcium sulphite, lead sulphate, lead sulphite, barium sulphate or barium sulphite. The intermediate sulphate or sulphite salts can be subjected to thermal decomposition to produce a metal oxide, such as calcium oxide, and sulphur dioxide. The sulphur dioxide can be re-used for the salting out of sulphate or sulphite salts from the leach solution and regenerating hydrochloric acid.

Particular aspects of the process are:
hydrochloric acid strength is regenerated in a base metal chloride brine;
the solution that is generated is high in chloride ions and low in sulphate or sulphite ions;
the leach process, working in a chloride medium, is maintained by addition of sulphur dioxide gas or sulphuric acid;
a metal, such as zinc or magnesium, is recovered from a chloride brine as an only moderately hydrated salt, which can be thermally decomposed, re-dissolved in sulphate medium and electrowon directly from this solution, or sold directly, as the sulphate or sulphite, or after thermal decomposition to oxide;
the high vapour pressure of hydrochloric acid can be exploited to move acid between the liquor and vapour phases, thus providing a means of controlling the chemistry in specific unit operations.

The present invention is further described in more detail and by way of several examples. Such examples, however, are not to be construed as limiting in any way either the spirit or scope of the invention.

### Non-sulphide ores

A first embodiment of the invention provides a process for leaching magnesium, as well as at least some valuable nickel and cobalt, from non-sulphide ores such as lateritic ores, limonitic oxides and/or siliceous saprolites, in a primarily hydrochloric acid medium. The main leaching agent is hydronium ion in a background of chloride, as dictated by the intrinsic build-up of impurities, particularly magnesium chloride.

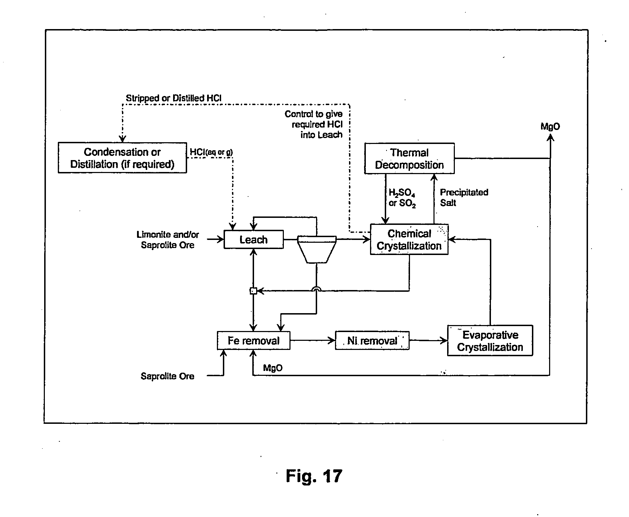

The treatment of non-sulphide materials is discussed in detail hereinafter using a nickel laterite as an example of a non-sulphide material. It will be obvious to a skilled person, however, that other non-sulphide materials can also be treated by the same process, such as zinc silicates, bauxites, and the like. The laterite example is also an example of a case in which the value metal is not the metal used in the chloride brine strength regeneration step. A concept flowsheet of the process is shown in Figure 17.

The regeneration of hydrochloric acid and recovery of magnesium, as described above, is not associated with excessive water removal by evaporation, since the magnesium is first recovered by precipitation and not directly from a magnesium chloride electrolyte solution (as is the case for the Jaguar process). However, as an alternative, evaporative crystallisation (within, or only slightly exceeding normal water balance requirements) may be utilised to alleviate the load on the chemical crystallisation step. This alternative is made possible due to the superimposed effect of the background brine on the degree of salt precipitation upon water evaporation.

The acid strength of the spent magnesium chloride brine is restored by the addition of sulphuric acid or sulphur dioxide gas, through which a low-hydration state sulphate or sulphite of magnesium is precipitated, while generating hydrochloric acid in solution.

The laterite leach residue may be treated in a subsequent leach step to maximise nickel and cobalt extractions.

For the sulphate, the experimental data of Linke and Seidell (1965) shows that kieserite (the magnesium sulphate monohydrate) is the preferred crystallisation product at higher temperature (∼100°C), which further minimises the energy required for calcination to form magnesia (which may be used partly as a recycled neutralising agent) and sulphur dioxide. The simplified reaction may be written as follows:

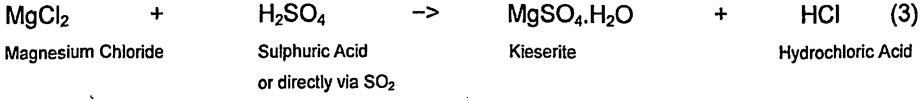

A crystalline product with a content of less than 0.01% total chloride was produced in this manner. The co-crystallisation of Ni into the crystal structure of kieserite was found to be minimised when executing the above reaction close to the atmospheric boiling point of the solution (or even at higher temperature by applying pressure). It is thus envisaged that it will be possible, using this process, to generate high purity magnesia for sale and/or for use as a neutralising agent. Alternatively, if nickel loss is found to be unacceptable, the nickel may be removed prior to crystallisation by chemical means, for example, ion-exchange, solvent extraction, cementation, precipitation, etc. In addition, relatively expensive hydrochloric acid is regenerated, using sulphuric acid or sulphur dioxide, which are relatively cheap and readily available reagents. A particularly attractive option to resolve this problem may lie in a stage-wise approach to crystallisation. The operating conditions may be manipulated to first remove the bulk of the nickel as a deliberate constituent in an impure magnesium sulphate salt, while the production of the pure salt is reserved for the latter stages of crystallisation where the solution tenor of nickel has been exhausted.

The ferric-ferrous couple in the brine system appears to play an advantageous role in the direct utilisation of sulphur dioxide to precipitate the sulphate or sulphite salt. Without the presence of ferric ion, the capacity of the solution to absorb sulphur dioxide may be found to be low in solutions with a high brine background and is therefore not efficiently absorbed in the system. However, the presence of ferric ions allows the direct absorption of the gas into the solution due to the reduction reaction of ferric to ferrous ion. This reaction appears to be accompanied by changes in solution which, in turn, result in the preferential salting out of the magnesium sulphate or sulphite salt. A particularly important aspect of the above chemistry is the tendency of Reaction 3 to become less efficient as the amount of hydrochloric acid produced increases over time. The reason for this may be twofold. Firstly, the chemical speciation may change as the amount of hydrochloric acid increase due to the formation of the bisulphate or bisulphite (HSO₄⁻, HSO₃⁻) ion. The end result is an increase in the solubility of the salt since the concentration of sulphate or sulphite ion is effectively lowered by its complexation with the hydronium ion. Secondly, the kinetics of the precipitation reaction becomes very slow, particularly when using sulphur dioxide as the reagent, i.e. the reaction between ferric ion and sulphur dioxide becomes kinetically limiting.

Fortunately, hydrochloric acid shows a high vapour pressure which allows its removal (directly or indirectly) via stripping (evaporation) with, for example, steam. Alternatively, a gas such as air or nitrogen may be used. The stripped hydrochloric acid may then be trapped directly in the process solution at another point in the circuit or may be condensed by removing heat and subsequently returned to another point in the circuit. Alternatively, the hydrochloric acid may be distilled from the brine solution. This removal of hydrochloric acid (and its subsequent recycling to another part of the circuit) can be used to drive the crystallisation reaction to the required extent. This characteristic of hydrochloric acid to be easily transferable to the vapour phase is thus exploited to overcome the inefficiencies of the crystallisation reaction.

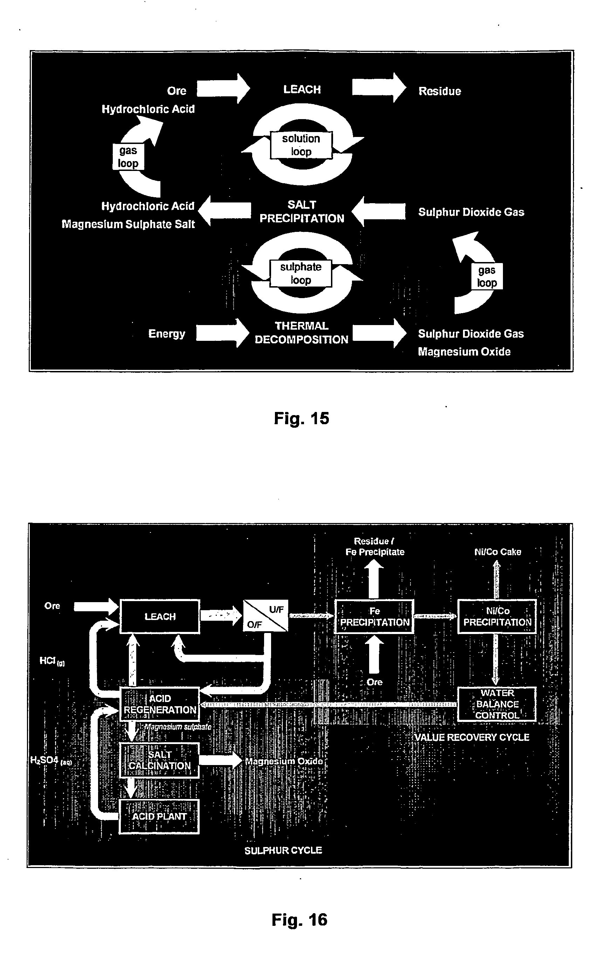

The process of the invention in its totality, described herein, is illustrated in Figure 15 and revolves around the lower solubility of Mg sulphate salt in solution with an increased amount of Mg chloride in the background. An introduction of sulphuric acid, sulphur dioxide, sulphur trioxide, or a mixture thereof into a pregnant leach solution (PLS) would therefore result in the precipitation of the sulphate salt while simultaneously regenerating hydrochloric acid for recycling back to the atmospheric leaching step. Figure 14 presents the predicted change in Mg sulphate solubility with an increase in the chloride background, using commercially available process simulation software known as AspenPlus^{®}.

The precipitated Mg sulphate or sulphite salt, in turn, is thermally decomposed to form magnesia (for internal use as a neutralising agent) and sulphur dioxide gas. The sulphur dioxide gas is converted into sulphuric acid in an acid plant and recycled back to the chemically driven sulphate precipitation step.

Besides temperature and water movement, brine concentration is an important variable in the integration of the flowsheet. In contrast, a sulphate-based process, like the Skye process, only has temperature and water movement available as degrees of freedom. This would result in the need to add higher amounts of water to prevent undesired crystallisation in the circuit, and this, in turn, would necessitate the removal of higher amounts of water (per kilogram ore treated) in order to achieve the desired level of evaporative crystallisation. This "drawn-in" effect of water would become increasingly more important as the Mg feed grade of the ore is increased. In contrast, the current invention makes use of a chemical crystallisation step, rather than an evaporative process, thus decoupling the water balance from variability in the Mg content of the feed ore. Also, because of the high brine background in the current process, there is a superimposed effect at work during water evaporation, as required strictly by water balance considerations, allowing still more Mg sulphate or sulphite precipitation. This would compensate for inefficiency during chemical precipitation (due to unwanted solubility behaviour) without a dramatic increase (beyond the normal water balance) in the steam-supplied energy requirement. In addition, the high brine background encourages the volatilisation of hydrochloric acid, introducing yet another degree of freedom in the control of the circuit. The mixed chloride-sulphate electrolyte system therefore adds a higher degree of process flexibility as compared to a pure, closed-circuit, sulphate-based process like the Skye Process.

The process suppresses the sulphate or sulphite solubility in the circuit by maintaining a high chloride background in the circuit. At the same time, the high chloride background ensures a high activity of the proton and low water activity. Figure 11 presents a surface plot of the proton activity as a function of the temperature and Mg chloride concentration.

The base-case conceptual flowsheet of the process of the invention is illustrated in Figure 16. The recycle around the atmospheric vessel allows the hydrochloric acid maximum residence time to react and minimises the neutralisation requirements (internal recycle load of Mg per ore treated) of the circuit. Only a bleed stream is neutralised to hydrolyse the Fe and then to recover Ni and Co via hydroxide precipitation. A single evaporation step follows after neutralisation to maintain the water balance. Chemical crystallisation, on a split stream of the main recycle, regenerates the equivalent hydrochloric acid consumed plus losses from the circuit. The precipitated sulphate salt is calcined to produce SO₂ gas and magnesia. The SO₂ gas is converted to sulphuric acid in an acid plant and recycled to the crystalliser, while a portion of the magnesia is recycled to satisfy the internal neutralisation requirements. The excess magnesia may be sold. A portion of the hydrochloric acid is volatilised to ensure the required amount of hydrochloric acid is recycled to the leach, i.e. to compensate for solubility inefficiencies in the crystalliser.

Figure 17 illustrates how the stripping of hydrochloric acid may be utilised to the advantage of the integrated circuit. In the case of the chemical crystallisation unit operation, the hydrochloric acid is removed from the brine solution so as to maintain the driving force for the precipitation reaction, i.e. to compensate for inefficiency and slow kinetics as the hydronium ion is produced in the precipitation reaction.

### Volatilisation of hydrochloric acid

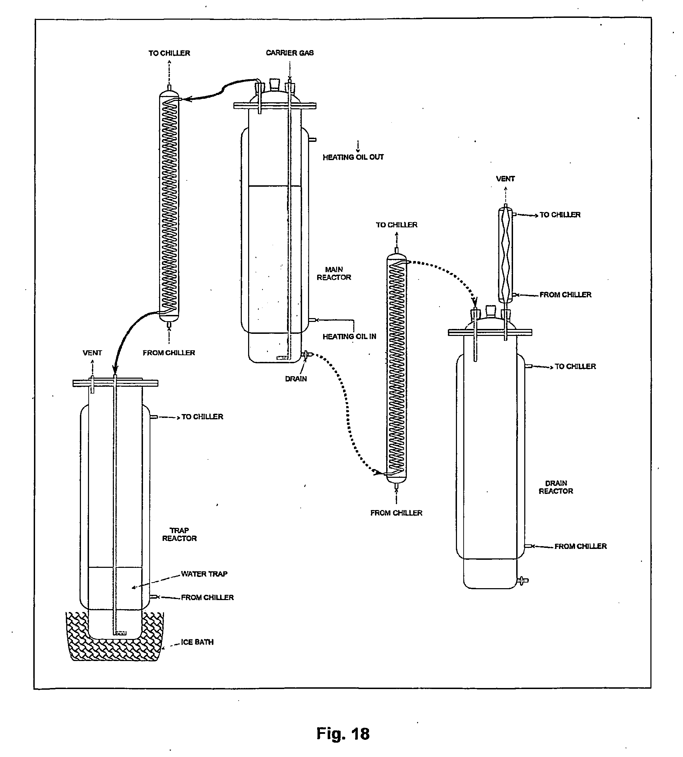

Testing of the degree of hydrochloric acid volatilisation was very important (Figure 18) and consisted of the following steps:
1) The brine solution was prepared by dissolving the various salts and solutions in water to a predetermined concentration, based on the molality scale (mol species/kg water);
2) The density of the solution was measured at 25°C and a sample was collected for chemical analysis;
3) A fixed amount of solution (∼2 kg) was then transferred to the main reactor;
4) The solution was then heated (via an oil circulating bath) to its boiling point without any gas flow;
5) The carrier gas (nitrogen) flow was then initiated (100 ml/min) through this solution to transport the vapour mixture to the trap reactor via a condenser;
6) The trap reactor (continuously cooled by an ice bath and circulating chilled water) contained a fixed amount of water (∼500 g) to minimise hydrochloric acid evaporation to the atmosphere;
7) After a set period of time (minimised to ensure the initial solution composition do not change too much over the course of the experiment) the carrier gas flow was stopped. The boiling point was then measured and the heating turned off;
8) The main reactor was drained via a condenser to the drain reactor (continuously cooled). This reactor was fitted with a reflux condenser to minimise hydrochloric acid losses to the environment;
9) The exact masses of the solution remaining in the main, the trap and drain reactors were then recorded. If the difference in total mass (between the sum of these masses and the initial solution mass) was significantly more than 1 g , the test was repeated;
10) Finally, the solution density in each of the three reactors was measured and samples collected for chemical analysis.

Metals in solution were quantified by inductively coupled plasma - optical emission spectroscopy (ICP-OES), while acid and total chloride contents were determined by wet chemical methods.

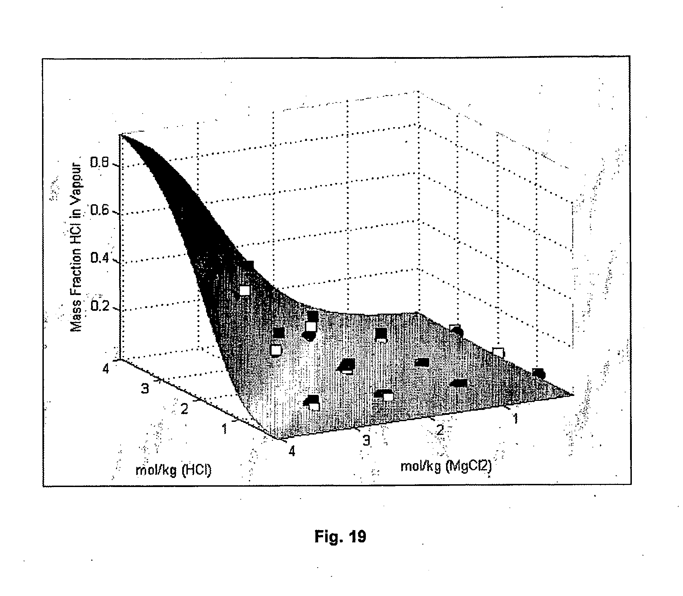

The results are represented in Figure 19 and illustrate the benefit of operating in a high chloride background. The blue circles represent the fraction HCl in equilibrium with the solution without iron present, while the yellow and red squares represents the measured data in the presence of 1 and 2 mol/kg FeCl₃, respectively. The black triangles represent solutions of 2 mol/kg HCl, 2 mol/kg FeCl₃ and 1 mol/kg MgSO₄, varying the background MgCl₂ from 2 and 4 mol/kg. A particular important observation is the fact that the presence of sulphate ion did not influence the volatility of HCl to any significant degree and thus opens the door for using the volatilising technique to control the acid in the primary leach and at the same time, suppress sulphate solubility in crystalliser.

### A scheme for combining hydrochloric acid volatilisation with sulphur dioxide absorption

The volatilisation of hydrochloric acid may also be utilised for the case where sulphur dioxide is directly absorbed to regenerate the equivalent acid value, i.e. eliminating the need for an acid plant.

A catalyst or oxidant, such as iron in the ferric (3+) state, may be used as carrier/sorbent for the sulphur dioxide gas during the acid regeneration step. The bulk of the iron may enter the solution in the ferric state during the leaching of the ore, as is the case for example when leaching oxide ores such as Ni limonites. However, if the bulk of the iron enters the solution in the ferrous (2+) state, an oxidant (like oxygen or a gas mixture containing both oxygen and sulphur dioxide) would be required to first oxidise the ferrous iron to its ferric state.

2FeCl₂ + 2HCl +½O₂ → 2FeCl₃ + H₂O (4)

The acid regeneration step then follows, where the absorption of sulphur dioxide is accompanied by a release of sulphuric acid into solution:

2FeCl₃ + SO₂ + 2H₂O → 2FeCl₂ + H₂SO₄ + 2HCl (5)

In the mixed chloride/sulphate system, the difference in salt solubility between the major metal chloride and sulphate species are exploited to regenerate the hydrochloric acid equivalent, consumed during leaching. In the case of magnesium leached from lateritic oxide ores, the reaction is as follows:

MgCl₂ + H₂SO₄ + H₂O → MgSO₄.H₂O_{(s)↓} + 2HCl (6)

The overall reaction during the acid regeneration step then becomes:

2FeCl₃ + MgCl₂ + SO₂ + 3H₂O → 2FeCl₂ + MgSO₄.H₂O_{(s)↓} + 4HCl (7)

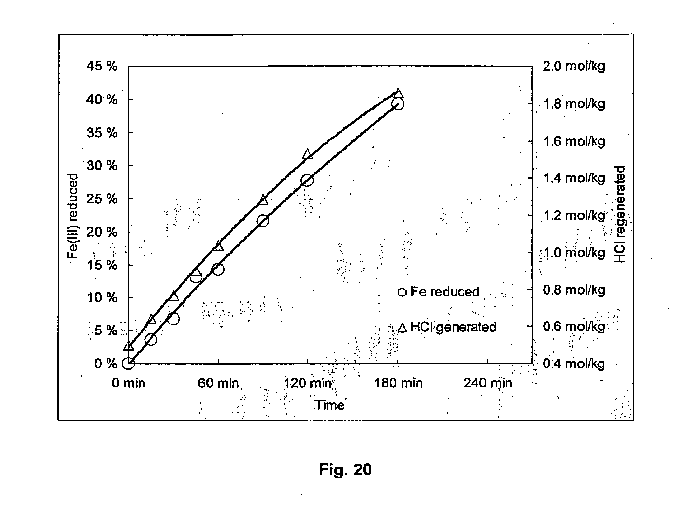

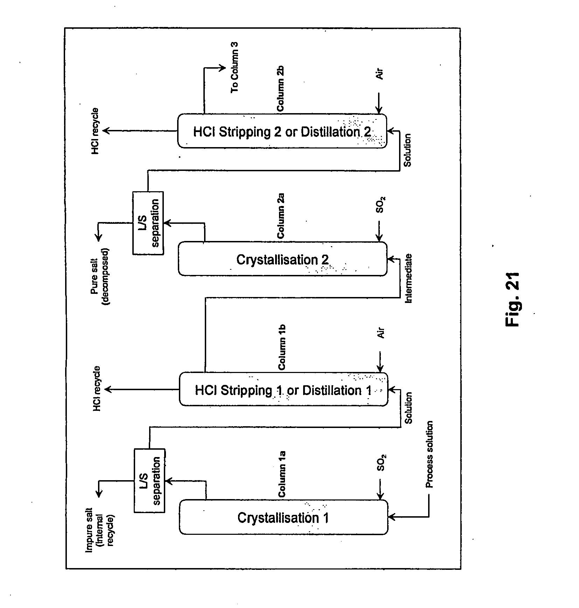

Similar reactions can be written for other metal species, thus providing a recipe for replacing the equivalent amount of hydrochloric acid that was consumed during the leaching step. The precipitated salt (MgSO₄.H₂O in the above example) may be thermally decomposed to regenerate the equivalent amount of sulphur dioxide gas, thus making the whole process completely self sustainable. Alternatively, sulphur (or another cheap sulphur source) may be burned in air to produce sulphur dioxide gas that can be used directly as described above, without the need to first convert the gas into sulphuric acid in an expensive acid plant. Figure 20 illustrates the result of tests conducted to verify the feasibility of the direct absorption of sulphur dioxide in ferric solution. A stoichiometric amount of hydrochloric acid was generated to the amount of sulphur dioxide added. The precipitation of Mg sulphate salt can thus be achieved via the absorption of sulphur dioxide gas while, at the same time, volatilising a portion of the formed hydrochloric acid to control the solubility point in the crystalliser column. Figure 21 illustrates an example of a possible scheme for combining the sulphur dioxide absorption and hydrochloric acid volatilisation steps in successive columns, while at the same time producing crystallised cake of increasing purity.

An example of how volatilisation may be utilised to overcome leaching inefficiencies

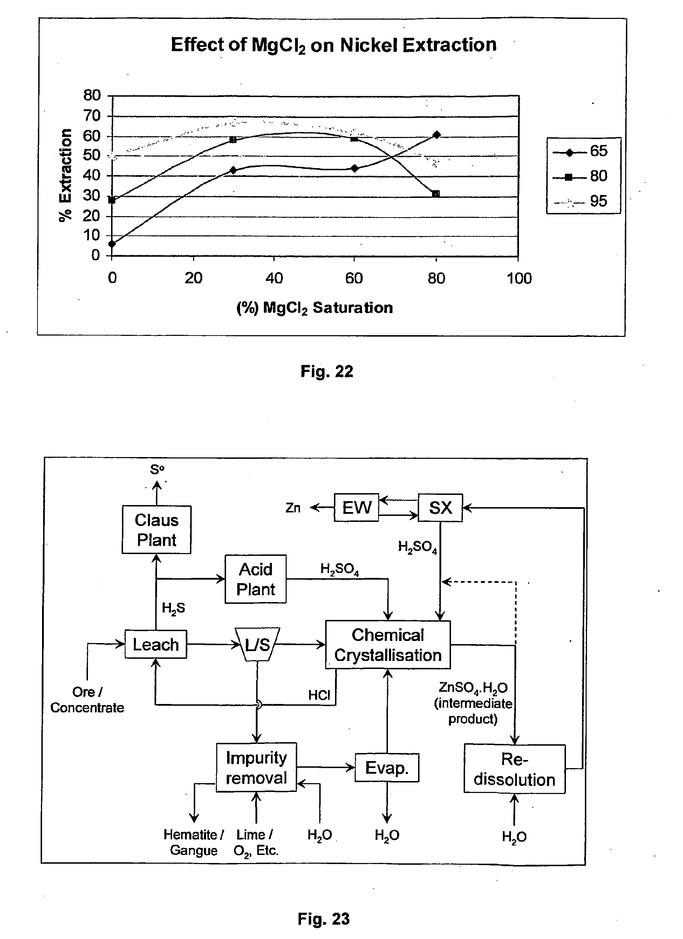

Figure 22 illustrates the results of leaching tests that have been conducted at varying magnesium chloride levels. It is clear that the background magnesium concentration should be limited due to its negative impact in the primary leach if it is above 60% saturation (c/f its saturation in the pure water), especially at higher leaching temperature. This retardation in leaching kinetics at high magnesium levels is thought to be due to localised saturation of magnesium salts at the particle/solution interface, resulting in the formation of passive films on the un-leached particle surface. In order to overcome this negative effect on the leaching kinetics, the salt levels may be decreased in solution by volatilising of a portion of the hydrochloric acid and recycling it back to leaching step. There are thus two opposing effects at work which could affect the economics of the overall process: the higher the background chloride concentration, the more easily hydrochloric acid is volatilised. However, the higher the magnesium chloride levels, the more profound the retardation in the leaching kinetics. Thus, for a given chloride level, there would be an optimum degree of volatilisation required; an added benefit is realised by virtue of the effective way volatilisation can be used to control the circuit, i.e. it can be used to buffer temporary imbalances in the crystalliser due to unexpected changes in the solution composition, due to (for example) variability in the ore feed composition or sulphate losses from the circuit.

### Sulphide ores

The use of a hydrochloric acid (chloride) medium for the oxidative or non-oxidative leaching of sulphide concentrates, such as those of zinc, is described below according to a second embodiment of the invention. Although non-oxidative processes for the recovery of base metals from sulphide concentrates are not novel in-itself (sulphate medium: S-C Copper Process, Kawulka *et al*, 1978; chloride medium: Molleman *et al,* 1998), a process that regenerates acid is not known in the art. A non-oxidative leaching process in a high brine solution, in combination with an integrated acid regeneration step, accompanied with hydrochloric acid volatilisation, is also not known in the art.

Valuable base metals, such as zinc, are leached from sulphide concentrates in a primarily hydrochloric acid medium. The base metal that is leached may ultimately be recovered in the form of saleable products. The leaching kinetics is fast and metals, like copper is easily rejected in the solid phase (as a CuₓS) and can be recovered from the tailings, if warranted, by an oxidative leaching process. An added advantage of operating under non-oxidative conditions is that elemental sulphur may be recovered via the conventional and well established Claus process (oil/petrochemical industry).

A hydrochloric acid leach medium is used to solubilise valuable zinc from a sulphide material in a non-oxidative step, and the zinc is then subsequently removed as a crystallised salt in an acid regeneration step. No neutralisation treatment of the pregnant leach liquor is necessary for the recovery of the zinc sulphate, which is recovered by addition of sulphuric acid. The sulphate precipitated is in the form of a monohydrate, rather than a hexahydrate (as a person skilled in the art would expect). This is particularly advantageous if the sulphate is to be converted to an oxide, as this entails a significant energy saving as compared to the hexahydrate. Impurities such as iron are removed by hydrolysis after neutralision of excess acid with recycled zinc oxide calcine. Alternatively, since hydrochloric acid exhibits a high vapour pressure, even in the mixed chloride-sulphate brine system, a portion of the hydrochloric acid may be stripped (evaporated) from the solution phase to the vapour phase (directly or indirectly) with steam or a gas, or may be removed via a distillation process. The removed hydrochloric acid is then further distilled (if required), condensed or directly absorbed in the process liquor and recycled to the primary leaching step.

The process is based on a novel reagent regeneration concept i.e. recycling of lixiviant and neutralising agent within the process.

Preliminary mass/energy balancing has shown significant operating cost benefits of this approach over conventional processing of sulphide ores.

The following factors are of particular relevance:
- The concentrate may be a cleaner concentrate or, preferably, a bulk rougher concentrate (higher overall valuable recovery) or even the raw ore;
- The non-oxidative leach operates at any required HCl concentration, provided the total chloride can be maintained in the rest of the circuit, but preferably, the leach would be operated at only slight excess amounts of HCl thus lowering neutralisation requirements in the bleed stream circuit (impurity removal circuit). A counter-current leaching configuration may even be utilised to ensure high zinc extraction but low residual acid concentration;
- Cu re-precipitates as CuₓS in the atmospheric leach, i.e. can be recovered from the gangue residue if warranted;
- Pb leaches as chloride complexes from the circuit and would probably precipitate in the crystalliser as a sulphate salt. The PbO formed in the thermal composition step is then easily recoverable from the residue of the ZnO re-leach step as pure PbSO₄ salt;
- ZnSO₄.H₂O salt is formed in the crystalliser when H₂SO₄ is added to the chloride solution, utilising the benefit of a difference in sulphate and chloride salt solubilities: ZnCl₂ + H₂SO₄ + H₂O → ZnSO₄.H₂O + 2HCl
- The major advantage of performing this reaction, is that the background brine is intrinsically binding free water thus forming dehydrated salts (<=1 mol H₂O per mol Zn) which requires significantly less energy to decompose compared to highly hydrated salts like ZnSO₄.6H₂O;
- A proportion of the formed hydrochloric acid during chemical crystallisation may be continually removed via stripping (evaporation) with steam or gas (directly or indirectly) or via distillation in order to keep the driving force for the crystallisation/precipitation reaction going. This removed hydrochloric acid is then recycled within the process;
- The above crystallisation and thermal decomposition steps are in stoichiometric balance and no make-up H₂SO₄ is required (except for real plant controlling purposes);
- A proportion of the brine solution is bled from the main circuit (prior to crystallisation), to restrict the build-up of Fe in the primary circuit. A proportional amount of ZnO (produced in the thermal decomposition step) is circulated to neutralise the free acid in the impurity bleed solution, thus allowing cementation of valuables (Ag, Ni, Co, Cd) with zinc dust, prior to Fe removal;
- Fe hydrolysis is conducted either atmospherically or at low pressure in an autoclave to form hematite and/or goethite. Another advantage of operating in high brine solution is that the very little free water is contained and this, in turn, allows dehydrate Fe oxides/hydroxides to precipitate hematite at significant lower temperatures than would have been the case in conventional sulphate systems;
- The bulk of the ZnO (minus the bleed to neutralisation) proceeds to a re-leach step where oxide is dissolved with H₂SO₄ in the returning anolyte from electrowinning. Once again, the acid is in stoichiometric balance and no make-up acid, nor neutralizing agent are required (except for real-plant controlling purposes);
- A portion of the precipitated zinc sulphate salt may be re-dissolved in wash water and sent to a conventional solvent extraction/electrowinning circuit, where the required amount of zinc metal is recovered and the stoichiometric equivalent amount of sulphuric acid returned (with unreacted zinc sulphate) to the crystallization section;
- Over the complete circuit, there is no/little need to bleed solution since Na₂SO₄ will build up to saturation and precipitate at the most concentrated point in the circuit;
- Since no/very little bleed is required, water removal is achieved with a multiple-effect evaporator.

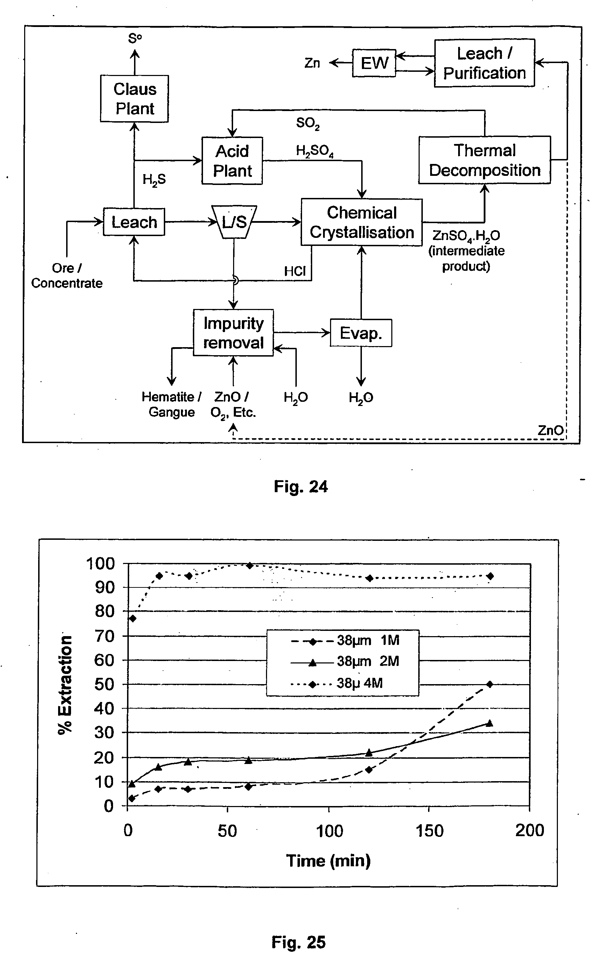

A crystallisation step utilises the low solubility product of base metal sulphate, such as those of zinc, against a chloride brine background, to remove leached values from the solution. The sulphate or sulphite crystals have low waters of hydration and are suitable for thermal decomposition to produce an oxide (to be used as an internal neutralising agent) that can either be sold directly or of which a proportion can be re-dissolved in sulphuric acid solution (produced in electrowinning) which is then used to directly electrowin metal (see Figure 23). The regeneration of hydrochloric acid and recovery of a base metal, such as zinc, as described above, is not associated with excessive water removal by evaporation, since the metal is recovered from a crystallised cake with low water content and low waters of crystallisation. However, since the thermal decomposition step is still energy intensive, a variation of the base-case flowsheet considers the re-dissolution of the zinc sulphate salt in washwater and recovering the metal via conventional solvent extraction-electrowinning technology. This scheme is illustrated in Figure 24.

The most optimal flowsheet configuration may be a hybrid between the base-case flowsheet (ARZn 0) and the first variation (ARZn 1); recovery of the bulk zinc via crystallisation/re-dissolution/solvent extraction/electrowinning and only decomposing a fraction of the precipitated zinc sulphate salt in order to satisfy internal neutralisation requirements. The important aspect of this invention relies on the significant difference of zinc solubility in the pulp: The simplified reaction may be written as follows:

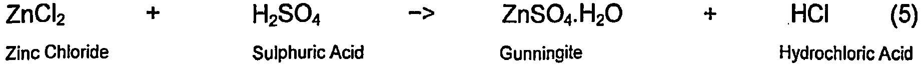

A crystalline product with a content of less than 0.01% total chloride was produced by the applicant in this manner, illustrating the potential of this technology, i.e. to generate high purity ZnO for sale (a proportional amount is used as an internal neutralising agent) or to re-dissolve the ZnO in sulphuric acid solution (returning from electrowinning) and directly electrowinning Zn metal from the resulting solution. In addition, relatively expensive hydrochloric acid is regenerated, using a relatively cheap and readily available reagent, i.e. sulphuric acid.

Similarly to the non-sulphide examples, volatilisation of a portion of the formed hydrochloric acid would be essential for the effective control of the circuit, i.e. to compensate for temporary imbalances in the circuit and to, for example, compensate for sulphate losses from the circuit.

### An example of the importance of volatilising a portion of the hydrochloric acid from the crystalliser

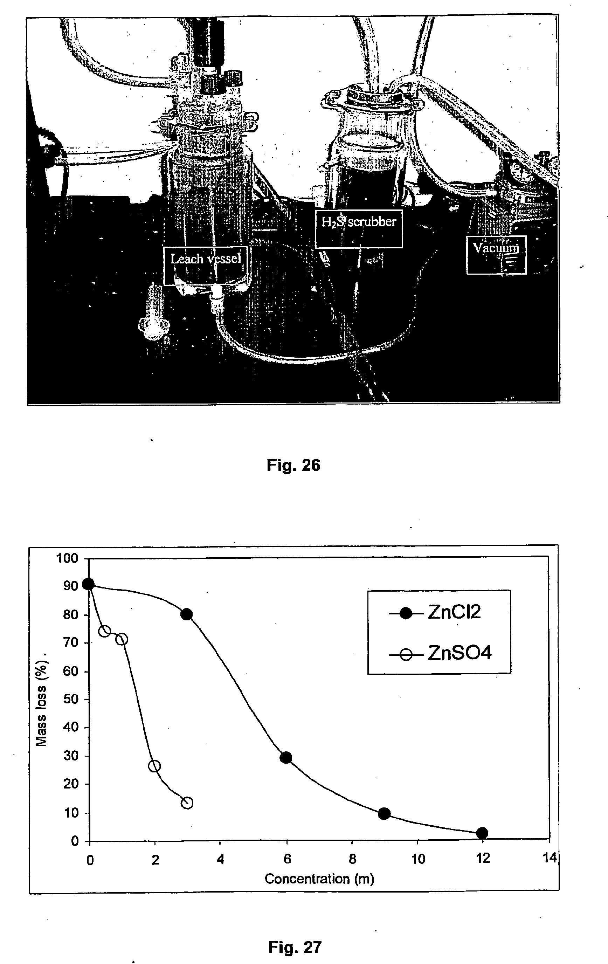

Favourable leaching kinetics were achieved on a bulk rougher concentrate indicating that this process is suitable for leaching value metals, such as zinc, silver and lead, from a sulphide source. Of particular interest was the fast (< 1 hr) kinetics of leaching at temperature of 85°C in 4 molar hydrochloric acid solutions (Figure 25). The experimental setup is illustrated in Figure 26.

Subsequent testwork (Figure 27) revealed a similar (to the laterite ore behaviour), but more profound, retardation of the leaching kinetics when conducted in a high metal background. Once again, the reason for this behaviour is thought to be due to the precipitation of saturated salts on the un-leached particles, especially when the background salt concentration is high. Alternatively, the reverse of Reaction 6 may become more profound when high zinc concentration is prevalent in the leach.

ZnS + 2H⁺ ⇔ Zn²⁺ + H₂S (6)

Volatilisation of some hydrochloric acid form the crystalliser would therefore be required to ensure enough acid, under relatively low salt concentration, is available in the non-oxidative leaching step.

### Metallurgical assessment

The laboratory simulation consisted of four processing steps, i.e. leaching, crystallisation, thermal decomposition and re-leaching of ZnO calcine. The deportment of the following elements was followed through the circuit (limited by the lower detection limit of 10 ppm):
Aluminium, Calcium, Cadmium, Cobalt, Chrome, Copper, Iron, Magnesium, Manganese, Nickel, Lead, Silicone, Zinc

The test conditions were based on the preliminary mass/energy balance simulation. One significant difference between the computer and the test simulations was the fact that the computer simulation was conducted on a cleaner concentrate (∼50% Zn), while the laboratory simulation was conducted on a rougher concentrate (∼5% Zn).

The metallurgical assessment in this early stage of research was only focussed on the non-oxidative atmospheric leaching and the crystalliser unit operations. The non-oxidative leaching setup is illustrated in Figure 26.

The vapour phase was trapped through a ferric sulphate scrubber in order to convert all the H₂S, formed in the leach, to elemental sulphur. A vacuum over the scrubber was found to be more functional than applying a positive pressure in the leaching vessel, i.e. to H₂S leakage to the laboratory environment. However, air was sparged through the leaching vessel in order to ensure the constant removal of H₂S from the system, i.e. to drive the Reaction 6 to the right hand side:

The major advantage of the crystallisation (of ZnSO₄.H₂O) scheme, is that no post-leach neutralisation is required, thus the leach can be operated at any desired concentration of HCl, i.e. to achieve fast kinetics.

The water balance of the process is maintained by evaporation, to control brine strength, compensating for various water inputs, such as with the leach feed, wash waters, and so forth.

### Leaching of a sulphide ore

The process will now further be explained by using the example of a zinc sulphide process.

A sphalerite bearing flotation concentrate was used, prepared from ore from the Gamsberg deposit (South Africa). The concentrate was leached in 4N HCl, against a background of zinc chloride in solution, at 85 °C. The leach was found to be essentially complete within 15 to 30 minutes. The background concentration of zinc chloride and the ratio of concentrate to brine were selected so as to prepare a pregnant leach solution at 80% saturation of zinc, as the chloride. The leach liquor was contacted with 98% sulphuric acid in a stirred beaker, to precipitate an amount of zinc sulphate equivalent to the quantity of zinc leached. The precipitate was found to be a crystalline zinc sulphate, with a calculated hemihydrate hydration state. The salt optionally may be calcined to oxide at a suitable temperature, e.g. 750°C, with air, so as to produce a gas phase with at least 20% SO₂, suitable for a sulphuric acid plant.

### Crystallisation

Synthetic head solution with zinc, ferrous, sodium as both chlorides and sulphates were prepared at 60°C to which stoichiometric amounts of sulphuric were added. The objectives of these tests were twofold: firstly to determine the solubilities of the main components in solution and secondly, to determine the amount and purity of crystals that can be formed through the addition of sulphuric acid. The results of these tests are summarised in Table 1.

**Table 1: Solubility and crystallisation results**

| **Test** | **Lixiviant** | | | | | **Crystals** | | | | |
|---|---|---|---|---|---|---|---|---|---|---|
| | **Zn g/l** | **Fe g/l** | **Na g/l** | **Cl g/l** | **SO₄ g/l** | **Zn** | **Fe** | **Na** | **Cl** | **SO₄** |
| 20050324D4 | 288 | 0 | 0 | 318 | 167 | 40% | 0% | 0% | 5% | 41% |
| 20050324D5 | 290 | 0 | 52 | 407 | 36 | 41% | 0% | 1% | 5% | 45% |
| 20050324D6 | 98 | 3.8 | 61 | 61 | 230 | - | - | - | - | - |
| 20050324D7 | 320 | 6.3 | 23 | 373 | 94 | 38% | 2.5% | 0.3% | 4% | 46% |

No crystals were formed in test 20050324D6 due to the low initial concentration of zinc. These results have shown that the concept of primary reagent regeneration by precipitation crystallisation is fundamentally sound in the Zn system.

### Preparation of high acid strength chloride brine (superacid)

A chloride brine can be contacted with sulphuric acid or sulphur dioxide so as to produce a hydrochloric acid brine of a superazeotropic concentration (i.e. where the resultant hydrochloric acid strength exceeds the azeotrope). No sophisticated distillation techniques or expensive reagents are required in the process. This provides a simple and cheap manner for the production of liquors with very high acidities, for subsequent use in certain processes, such as specialty dissolution processes commonly used in platinum group metals refining practice.

The acid strength which can be achieved, be this under or over the azeotrope, is governed by the chloride selected.

### Preparation of high acid strength chloride brine

At 100°C, magnesium chloride is soluble to the extent of ca. 42.3g/100g saturated solution. When adding H₂SO₄, in the extreme case of full magnesium precipitation as the monohydrate, ca. 50.3 g of salt is formed, leaving 49.7g water and 32.4g HCl; with an acid strength of 39%.

### Preparation of high acid strength chloride brine

At 80°C, zinc chloride is soluble to the extent of ca. 84.4g/100g saturated solution. When adding H₂SO₄, in the case of 75% zinc precipitation as the monohydrate, ca. 71.7 g of salt is formed, leaving 28.3g water and 33.9g HCl; with an acid strength of 54%.

While the invention has been described in detail with respect to specific embodiments thereof, it will be appreciated by those skilled in the art that various alterations, modifications and other changes may be made to the invention without departing from the spirit and scope of the present invention.

While the invention has been described in detail with respect to specific embodiments thereof, it will be appreciated by those skilled in the art that various alterations, modifications and other changes may be made to the invention without departing from the spirit and scope of the present invention. It is therefore intended that the claims cover or encompass all such modifications, alterations and/or changes.

### REFERENCES

Rice, N.M. The Hydrochloric Acid Route for Nickel Laterites: A Brief History of an ongoing Project, Leeds University Mining Association Journal, pp.59-89, 1989
Rice, N.M. and Strong, L.W. The leaching of lateritic nickel ores in hydrochloric acid, Canadian Metallurgical Quarterly, Vol.13, No.3, pp.485-493, 1974
Dalvi, A.D., Gordon, W. and Osbome, R.C. The past and the future of nickel laterites, IN: TMS 2004-133rd Annual Meeting & Exhibition Proceedings, Charlotte, N. Carolina, March 14-18, 2004
Monhemius, A.J., Treatment of lateritic ores of nickel to produce ferronickel, matte or precipitated sulphide, IN: Extractive Metallurgy of Nickel, Critical Reports on Applied Chemistry Vol.17, ed. Burkin, A.R., John Wiley & Sons, pp.51-75, 1987
Elias, M. Nickel laterite deposits - geological overview, resources and exploitation, IN: Giant Ore Deposits: Characterisitics, Genesis and Exploration, eds. Cooke, D.R. and Pongratz, J., Special Publication, Centre of Ore Deposit Research, University of Tasmania, pp.205-220, 2002
Harris, G.B., Magee, T.J., Lakshmanan, V.I. and Sridhar, R. The Jaguar Nickel Inc. Sechol Laterite Project Atmospheric Chloride Leach Process, IN: International Laterite Nickel Symposium. Proceedings 133rd TMS Annual Meeting, Charlotte, N. Carolina, eds. Imrie, W.P., and Lane, D.M., The Minerals, Metals and Materials Society, pp.219-241, 2004
Steinbach, W. and Baerhold, P. Comparison of spray roasting and fluidised bed granulation for the recovery of hydrochloric acid from metallurgical processes through pyrohydrolysis, IN: Chloride Metallurgy 2002, Metallurgical Society of Canada, 52nd Annual Hydrometallurgy Meeting, Eds. E. Peck and G. Van Weert, Metallurgical Society of Canada, pp. 643-655, 2002
Adham, K and Lee, C. Energy recovery in the metal chloride pyrohydrolysers, IN: Chloride Metallurgy 2002, Metallurgical Society of Canada, 52nd Annual Hydrometallurgy Meeting, Eds. E. Peck and G. Van Weert, Metallurgical Society of Canada, pp. 657-671, 2002
Moyes, J., Houllis, F., Tong, A. and Sammut, D. The Intec Nickel Laterite Process, IN: ALTA 2005 Nickel/Cobalt Conference Proceedings (ref. Presentation), Perth, Australia, May 16-18, 2005
Kawulka, P., Kirby, C.R. and Bolton, G.K. Sherrit-Cominco Copper Process, CIM Bulletin, February, 1978
Molleman, E., Van Sandwijk, T. and Van Weert, G. Acid dissolution of iron-bearing zinc concentrates, Minerals & Metallurgical Processing, Vol.15, No.3, 1998
Linke, W.F. and Seidell, A. Solubilities of Inorganic and Metal Organic Compounds, 4th ed., Amer. Chem. Soc., Vol. 1 and 2, 1965
.

## Claims

1. A process for leaching a metal from an ore containing said metal, the process including the steps of:
(a) leaching the ore in the presence of hydrochloric acid so as to form a soluble metal-chloride salt in a leach solution;
(b) adding sulphuric acid and/or sulphur dioxide to the leach solution;
(c) recovering a solid metal-sulphate or metal-sulphite from the leach solution;
(d) regenerating hydrochloric acid; and
(e) continuously transferring at least a portion of the hydrochloric acid in solution to the vapour phase.

2. A process according to claim 1, wherein the hydrochloric acid in the vapour phase is returned to step (a).

3. A process according to either of claims 1 or 2, wherein the hydrochloric acid is transferred to the vapour phase by heating.

4. A process according to any one of claims 1 to 3, wherein the hydrochloric acid in the vapour phase is subjected to a distillation process prior to being returned to step (a) so as to remove water.

5. A process according to any one of claims 1 to 4, wherein the sulphuric acid and/or sulphur dioxide is added to the leach solution after the leaching step and the hydrochloric acid is simultaneously regenerated.

6. A process according to any one of claims 1 to 4, wherein:
the sulphuric acid and/or sulphur dioxide is added to the leach solution during the leaching step so as to form the soluble metal-chloride salt and a solid metal-sulphate or metal-sulphite salt in a leach solution; and
the metal-sulphate or metal-sulphite salt is subsequently recovered and a hydrochloric acid solution that is high in chloride ions and low in sulphate or sulphite ions is simultaneously generated.

7. A process according to any one of claims 1 to 6, wherein the metal-sulphate or metal sulphite has the formula MeSOₓ.yH₂0, where:
(a) Me is a metal;
(b) x is 3 or 4; and
(c) y is 0 or greater.

8. A process according to any one of the preceding claims, wherein the source of the metal in the metal-sulphate or metal-sulphite is predominantly from the ore.

9. A process according to any one of the preceding claims, wherein the ore is an essentially oxidic or silicaceous base metal ore.

10. A process according to claim 9, wherein the ore is a zinc oxide ore.

11. A process according to any one of claims 1 to 8, wherein the ore is a lateritic nickel ore.

12. A process according to claim 11, wherein the ore is a saprolitic or limonitic ore.

13. A process according to any one of claims 1 to 8, wherein the ore is a sulphide, titanium or aluminium ore.

14. A process according to any one of the preceding claims, wherein the metal that is leached from the ore is selected from the group consisting of Zn, Cu, Ti, Al, Cr, Ni, Co, Mn, Fe, Pb, Na, K, Ca, platinum group metals and gold.

15. A process according to any one of the preceding claims, wherein the metal in the metal-sulphate or metal-sulphite is the metal that is leached, and the process additionally includes a step of decomposing the metal-sulphate or metal-sulphite to recover the metal.

16. A process according to any one of claims 1 to 14, wherein the metal in the metal-sulphate or metal-sulphite is a metal of less value than the metal that is leached from the ore.

## Patentansprüche

1. Verfahren zur Laugung eines Metalls aus einem Erz, welches dieses Metall enthält, wobei das Verfahren die folgenden Schritte umfasst:
(a) Laugung des Erzes in Gegenwart von Salzsäure, um dadurch ein lösliches Metallchlorid-Salz in einer Laugungslösung zu bilden;
(b) Zugabe von Schwefelsäure und/oder Schwefeldioxid zu der Laugungslösung;
(c) Wiedergewinnung eines festen Metallsulfats oder Metallsulfits aus der Laugungslösung;
(d) Wiedergewinnung der Salzsäure; und
(e) kontinuierliche Überführung mindestens eines Teils der Salzsäure von der Lösung in die Dampfphase.

2. Verfahren nach Anspruch 1, wobei die Salzsäure in der Dampfphase in den Schritt (a) zurückgeführt wird.

3. Verfahren nach einem der Ansprüche 1 oder 2, wobei die Salzsäure durch Erhitzen in die Dampfphase überführt wird.

4. Verfahren nach einem der Ansprüche 1 bis 3, wobei die Salzsäure in der Dampfphase einem Destillationsverfahren unterworfen wird, ehe sie in den Schritt (a) zurückgeführt wird, um dadurch Wasser zu entfernen.

5. Verfahren nach einem der Ansprüche 1 bis 4, wobei die Schwefelsäure und/oder das Schwefeldioxid zu der Laugungslösung nach dem Laugungsschritt gegeben werden und die Salzsäure gleichzeitig regeneriert wird.

6. Verfahren nach einem der Ansprüche 1 bis 4, wobei
die Schwefelsäure und/oder das Schwefeldioxid zu der Laugungslösung während des Laugungsschritts gegeben werden, um ein lösliches Metallchlorid-Salz und ein festes Metallsulfat- oder Metallsulfit-Salz in einer Laugungslösung zu bilden; und
das Metallsulfat- oder Metallsulfit-Salz anschließend wieder gewonnen werden und eine Salzsäure-Lösung, die reich an Chloridionen und arm an Sulfat- oder Sulfitionen ist, gleichzeitig erzeugt wird.

7. Verfahren nach einem der Ansprüche 1 bis 6, wobei das Metallsulfat oder Metallsulfit die Formel MeSOₓ ·yH₂O aufweist, wobei:
(a) Me ein Metall darstellt;
(b) x gleich 3 oder 4 ist; und
(c) y gleich 0 oder größer ist.

8. Verfahren nach einem der vorstehenden Ansprüche, wobei die Quelle des Metalls in dem Metallsulfat oder Metallsulfit vorwiegend aus dem Erz stammt.

9. Verfahren nach einem der vorstehenden Ansprüche, wobei das Erz ein im Wesentlichen oxidisches oder silikatisches Basismetall-Erz ist.

10. Verfahren nach Anspruch 9, wobei das Erz ein Zinkoxiderz ist.

11. Verfahren nach einem der Ansprüche 1 bis 8, wobei das Erz ein lateritisches Nickelerz ist.

12. Verfahren nach Anspruch 11, wobei das Erz ein saprolithisches oder limonitisches Erz ist.

13. Verfahren nach einem der Ansprüche 1 bis 8, wobei das Erz ein Sulfid-, Titan- oder Aluminiumerz ist.

14. Verfahren nach einem der vorstehenden Ansprüche, wobei Metall, das aus dem Erz gelaugt wird, aus der Gruppe ausgewählt wird, die aus Zn, Cu, Ti, Al, Cr, Ni, Co, Mn, Fe, Pb, Na, K, Ca, Metallen der Platin-Gruppe und Gold besteht.

15. Verfahren nach einem der vorstehenden Ansprüche, wobei das Metall in dem Metallsulfat oder Metallsulfit das Metall ist, welches gelaugt wird, und das Verfahren zusätzlich einen Schritt der Zersetzung des Metallsulfats oder Metallsulfits umfasst, um das Metall wiederzugewinnen.

16. Verfahren nach einem der Ansprüche 1 bis 14, wobei das Metall in dem Metallsulfat oder Metallsulfit ein Metall von geringerem Wert ist als jenes Metall, das aus dem Erz gelaugt wird.

## Revendications

1. Procédé de lixiviation d'un ion métallique à partir d'un minerai contenant ledit métal, le procédé comprenant les étapes de :
(a) lixiviation du minerai en présence d'acide chlorhydrique de manière à former un sel de chlorure de métal soluble dans une solution de lixiviation ;
(b) ajout d'acide sulfurique et/ou de dioxyde de soufre à la solution de lixiviation ;
(c) récupération d'un sulfate de métal ou sulfite de métal solide à partir de la solution de lixiviation ;
(d) régénération d'acide chlorhydrique ; et
(e) transfert en continu d'au moins une partie de l'acide chlorhydrique en solution vers la phase vapeur.

2. Procédé selon la revendication 1, dans lequel l'acide chlorhydrique dans la phase vapeur est retourné à l'étape (a).

3. Procédé selon une des revendications 1 ou 2, dans lequel l'acide chlorhydrique est transféré vers la phase vapeur par chauffage.

4. Procédé selon l'une quelconque des revendications 1 à 3, dans lequel l'acide chlorhydrique dans la phase vapeur est soumis à un procédé de distillation avant d'être retourné à l'étape (a) de manière à éliminer l'eau.

5. Procédé selon l'une quelconque des revendications 1 à 4, dans lequel l'acide sulfurique et/ou le dioxyde de soufre sont ajoutés à la solution de lixiviation après l'étape de lixiviation et l'acide chlorhydrique est simultanément régénéré.

6. Procédé selon l'une quelconque des revendications 1 à 4, dans lequel :
l'acide sulfurique et/ou le dioxyde de soufre sont ajoutés à la solution de lixiviation pendant l'étape de lixiviation de manière à former le sel de chlorure de métal soluble et un sel de sulfate de métal ou de sulfite de métal solide dans une solution de lixiviation ; et
le sel de sulfate de métal ou de sulfite de métal est ensuite récupéré et une solution d'acide chlorhydrique qui est riche en ions chlorures et pauvre en ions sulfates ou sulfites est simultanément générée.

7. Procédé selon l'une quelconque des revendications 1 à 6, dans lequel le sulfate de métal ou sulfite de métal a la formule MeSOx.yH₂O, dans laquelle :
(a) Me est un métal ;
(b) x est 3 ou 4 ; et
(c) y est 0 ou plus.

8. Procédé selon l'une quelconque des revendications précédentes, dans lequel la source du métal dans le sulfate de métal ou le sulfite de métal provient principalement du minerai.

9. Procédé selon l'une quelconque des revendications précédentes, dans lequel le minerai est un minerai de métal essentiellement à base d'oxyde ou de silice.

10. Procédé selon la revendication 9, dans lequel le minerai est un minerai d'oxyde de zinc.

11. Procédé selon l'une quelconque des revendications 1 à 8, dans lequel le minerai est un minerai de nickel latéritique.

12. Procédé selon la revendication 11, dans lequel le minerai est un minerai saprolitique ou limonitique.

13. Procédé selon l'une quelconque des revendications 1 à 8, dans lequel le minerai est un minerai de sulfure, de titane ou d'aluminium.

14. Procédé selon l'une quelconque des revendications précédentes, dans lequel le métal qui est lixivié à partir du minerai est choisi dans le groupe consistant en Zn, Cu, Ti, Al, Cr, Ni, Co, Mn, Fe, Pb, Na, K, Ca, des métaux du groupe du platine et de l'or.

15. Procédé selon l'une quelconque des revendications précédentes, dans lequel le métal dans le sulfate de métal ou le sulfite de métal est le métal qui est lixivié, et le procédé comprend en outre une étape de décomposition du sulfate de métal ou du sulfite de métal pour récupérer le métal.

16. Procédé selon l'une quelconque des revendications 1 à 14, dans lequel le métal dans le sulfate de métal ou le sulfite de métal est un métal de valeur inférieure au métal qui est lixivié à partir du minerai.
